# EUROPEAN PATENT SPECIFICATION

(11) **EP 4 133 881 B1**
(45) Date of publication and mention of the grant of the patent: **11.06.2025**
(21) Application number: 21720025.2
(22) Date of filing: 09.04.2021
(51) Int. Cl.: H04W 74/0816, H04W 74/0833, H04W 72/02

(54) **ADAPTING RACH TRANSMISSION IN UNLICENSED CARRIER**
ANPASSUNG DER RACH-ÜBERTRAGUNG BEI EINEM UNLIZENZIERTEN TRÄGER
ADAPTATION DE TRANSMISSION SUR CANAL RACH SUR UNE PORTEUSE SANS LICENCE

(30) Priority: 09.04.2020 US 202063007551 P
(43) Date of publication of application: 15.02.2023
(73) Proprietor: Telefonaktiebolaget LM Ericsson (publ), 164 83 Stockholm (SE)
(72) Inventor: UESAKA, Kazuyoshi, Kawasaki, Kanagawa 215-0031 (JP); KAZMI, Muhammad Ali, 174 64 Sundbyberg (SE); THANGARASA, Santhan, 162 44 Vällingby (SE); HARRISON, Robert Mark, Grapevine, Texas 76051 (US)
(74) Representative: Ericsson
(86) International application number: PCT/SE2021/050323
(87) International publication number: WO 2021/206620

(56) References cited:
- WO-A1-2019/245779
- US-A1- 2019 132 882
- ERICSSON: "Gapless msgA transmissions in NR-U", vol. RAN WG2, no. Electronic Meeting; 20200224 - 20200306, 13 February 2020 (2020-02-13), XP051848777, Retrieved from the Internet <URL:https://ftp.3gpp.org/tsg_ran/WG2_RL2/TSGR2_109_e/Docs/R2-2001209.zip R2-2001209 - Gapless msgA transmissions in NR-U.docx> [retrieved on 20200213]

## Description

### FIELD

The present disclosure relates to wireless communications, and in particular, to adapting a timing gap for a random access procedure and/or selecting a random access procedure type to implement.

### BACKGROUND

### 4-step Random Access (RA)

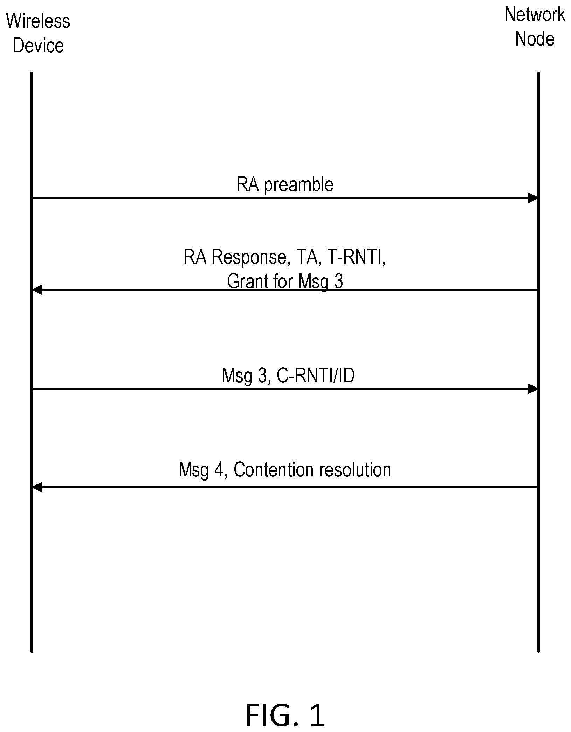

The legacy/known 4-step RA has been used in the 3^{rd} Generation Partnership Project's (3GPP) Long Term Evolution (LTE, also referred to as 4G) standards, and is also the baseline for 3GPP New Radio (NR) (NR is also referred to as 5G). The general principles of the legacy 4-step radio access channel (RACH) procedure in NR is illustrated in FIG. 1, and the steps are described below.

### Step 1: Preamble transmission:

The wireless device (WD) randomly selects a RA preamble (PREAMBLE_INDEX) corresponding to a selected synchronization signal (SS)/physical broadcast channel (PBCH) block, transmits the preamble on the physical random access channel (PRACH) occasion mapped by the selected SS/PBCH block. When the network node detects the preamble, the network node estimates the Timing alignment (TA) the wireless device should use in order to obtain uplink (UL) synchronization at the network node.

### Step 2: RA response (RAR)

The network node sends a RA response (RAR) including the TA, the temporary cell (TC)-radio network temporary identifier (RNTI) (temporary identifier) to be used by the wireless device, a Random Access Preamble identifier that matches the transmitted PREAMBLE_INDEX and a grant for message 3 (Msg3, which is part of step 3). The wireless device expects the RAR and thus monitors the physical downlink control channel (PDCCH) addressed to RA-RNTI to receive the RAR message from the network node until the configured RAR window (ra-ResponseWindow) has expired or until the RAR has been successfully received.

According to one or more wireless communication standards such as Third Generation Partnership Project (3GPP) Technical Specification (TS) 38.321: the medium access control (MAC) entity may stop ra-ResponseWindow and hence monitoring for Random Access Response(s)) after successful reception of a Random Access Response containing Random Access Preamble identifiers that matches the transmitted PREAMBLE_INDEX.

### Step 3: "Msg3" (UE ID or UE-specific C-RNTI)

In Msg3, the wireless device (i.e., user equipment (UE)) transmits its identifier (UE ID) for initial access to the network node, or if the wireless device is already in RRC_CONNECTED or RRC_INACTIVE mode and needs to, e.g., resync, the wireless device transmits its UE-specific RNTI.

If the network node cannot decode Msg3 at the granted UL resources, the network node may send downlink control information (DCI) addressed to TC-RNTI for retransmission of Msg3. Hybrid automatic repeat request (HARQ) retransmission is requested until the wireless devices restart the random access procedure from step 1 after reaching the maximum number of HARQ retransmissions or until Msg3 can be successfully received by the network node.

### Step 4: "Msg4" (contention resolution)

In Msg4, the network node responds by acknowledging the UE ID or C-RNTI. The Msg4 gives contention resolution, i.e., only one UE ID or C-RNTI may be sent even if several wireless devices have used the same preamble (and the same grant for Msg3 transmission) simultaneously.

For Msg4 reception, the wireless device monitors TC-RNTI (if the wireless device transmitted its UE ID in Msg3) or C-RNTI (if the wireless device transmitted its C-RNTI in Msg3).

In LTE, the 4-step RA may not be completed in less than a 14 ms/transmission time interval (TTI)/subframe (SF).

### 2-step Random Access

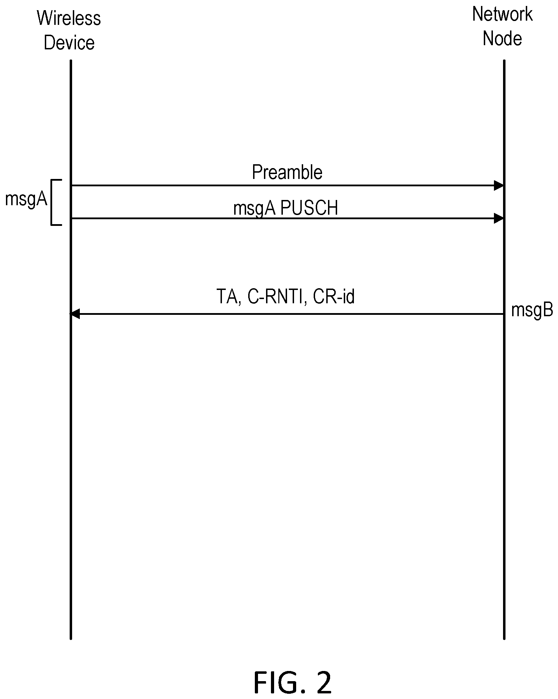

The 2-step RA procedure is illustrated in FIG. 2. Referring to FIG. 2, the 2-step RA provides shorter latency than the ordinary 4-step RA described above. In the 2-step RA, the preamble and a message corresponding to Msg3 (msgA physical uplink shared channel (PUSCH)) in the 4-step RA can, depending on configuration, be transmitted in two subsequent slots. The msgA PUSCH is sent on a resource dedicated to the specific preamble. This means that both the preamble and the Msg3 face contention but contention resolution, in this case, means that either the preamble and Msg 3 are sent without collision or both collide.

Upon successful reception msgA, the gNB will respond with a msgB. The msgB may be either a "successRAR", "fallbackRAR or "Back off". The content of msgB has been agreed as seen below. It is noted in particular that fallbackRAR provides a grant for a Msg3 PUSCH that identifies resources in which the UE should transmit the PUSCH, as well as other information.
Note: The notations "msgA" and "MsgA" are used interchangeably herein to denote message A. Similarly, the notations "msgB" and "MsgB" are used interchangeably herein to denote message B

The possibility to replace the 4-step message exchange by a 2-step message exchange may lead to reduced RA latency and fewer listen before talks (LBTs) processes (in case of unlicensed) that may need to be executed. On the other hand, the 2-step RA may consume more resources since 2-step RA uses contention-based transmission of the data. This means that the resources that are configured for the data transmission may often be unused.

If both the 4-step and 2-step RA are configured in a cell on shared PRACH resources (and for the wireless device), the wireless device may choose its preamble from one specific set if the wireless device wants to perform a 4-step RA, and from another set if the wireless device wants to perform a 2-step RA. Hence, a preamble partition is performed to distinguish between 4-step and 2-step RA when shared PRACH resources are used. Alternatively, the PRACH configurations are different for the 2-step and 4-step RA procedure, in which case, it can be deduced from where the preamble transmission is performed if the wireless device is performing a 2-step or 4-step procedure.

In one or more wireless communication standards such as 3GPP Release-16 (Rel-16), in 2-step RA operation, wireless devices are informed of the potential time-frequency resources where the wireless devices may transmit MsgA PRACH and MsgA PUSCH via higher layer signaling. PRACH is transmitted in periodically recurring RACH occasions ('ROs'), while the physical uplink shared channel (PUSCH) is transmitted in periodically recurring PUSCH occasions ('POs'). PUSCH occasions are described in MsgA PUSCH configurations provided by higher layer signaling. Each MsgA PUSCH configuration defines a starting time of the PUSCH occasions which is measured from the start of a corresponding RACH occasion. Multiple PUSCH occasions may be multiplexed in time and frequency in a MsgA PUSCH configuration, where POs in an orthogonal frequency-division multiplexing (OFDM) symbol occupy a given number of physical resource blocks (PRBs) and are adjacent in frequency, and where POs occupy 'L' contiguous OFDM symbols. POs multiplexed in time in a MsgA PUSCH configuration may be separated by a configured gap 'G' symbols long. The start of the first occupied OFDM symbol in a PUSCH slot is indicated via a start and length indicator value ('SLIV'). The MsgA PUSCH configuration may include multiple contiguous PUSCH slots, each slot containing the same number of POs. The start of the first PRB relative to the first PRB in a bandwidth part (BWP) is also given by the MsgA PUSCH configuration.

Each PRACH preamble maps to a PUSCH occasion and a demodulation reference signal (DMRS) port and/or a DMRS port-scrambling sequence combination according to a procedure described in one or more wireless communication standards such as in 3GPP TS 38.213. This mapping allows a network node to uniquely determine the location of the associated PUSCH in time and frequency as well as the DMRS port and/or scrambling from the preamble selected by the wireless device.

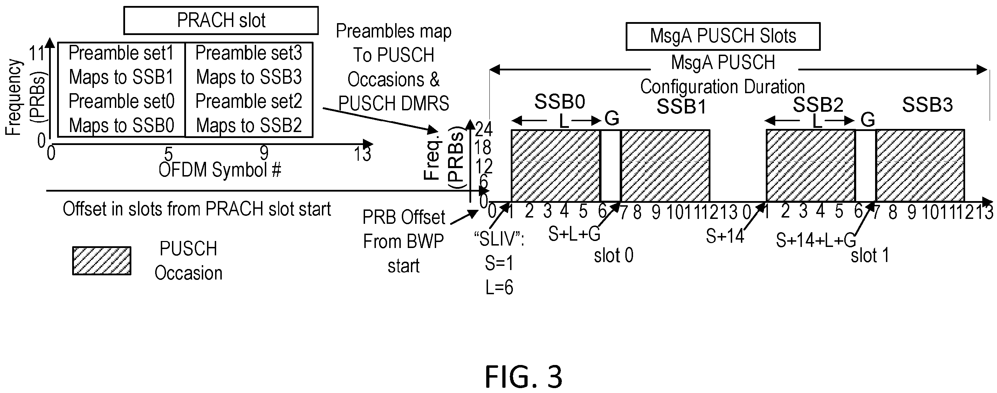

The PRACH preambles also map to associated SSBs. The SSB to preamble association combined with the preamble to PUSCH association allow a PO to be associated with a RACH preamble. This indirect preamble to PUSCH mapping may be used to allow a network node using analog beamforming to receive a MsgA PUSCH with the same beam that the network node uses to receive the MsgA RACH preamble. FIG. 3 is a diagram illustrating PRACH and PUSCH slots.

### NR over unlicensed band

Next generation wireless communication cellular systems are expected to support a wide range of use cases with varying requirements ranging from fully mobile devices to stationary internet of things (IoT) or fixed wireless broadband devices. The traffic pattern associated with some of these use cases is expected to consist of short or long bursts of data traffic with varying length of waiting period in between (here called an inactive state). In NR, both license assisted access and standalone operation in unlicensed spectrum (NR-U) (where unlicensed spectrum is also referred to as shared spectrum in this context) are to be supported in future releases of 3GPP wireless communication standard. Hence the procedure of PRACH transmission and/or scheduling request (SR) transmission in unlicensed spectrum may be investigated for future releases of 3GPP.

Network operation in an unlicensed spectrum may have to abide by one or more restrictions. One such restriction is that a device (e.g., a radio network node or a mobile terminal/wireless device) may have to monitor the shared medium, i.e., the channel, and determine that the shared medium is free (i.e., not being used by any other device(s)) before starting to transmit on the channel. This procedure is referred to as Listen-Before-Talk (LBT) or Clear Channel Assessment (CCA).

In the following, NR-U and the channel access procedure for an unlicensed channel based on LBT are described.

### NR-U

In order to help meet the ever-increasing data demand in wireless communication networks, NR is considered for both licensed and unlicensed spectrum. The standardization work for licensed spectrum in, for example, 3GPP Rel-15 was finalized, and the study item on NR-based Access to Unlicensed Spectrum was then later finalized. The corresponding work item was approved at the 3GPP radio access network (RAN) Plenary meeting 82, and compared to LTE license assisted access (LAA), NR-U may also need to support dual connectivity (DC) and standalone scenarios, where the MAC procedures including RACH and scheduling procedure on unlicensed spectrum may be subject to LBT and thus subject to potential LBT failures. In LTE LAA, there are no such issues since the RACH and scheduling related signaling can be transmitted on the primary cell (PCell) in licensed spectrum instead of unlicensed spectrum.

For discovery reference signal (DRS) transmission such as primary synchronization signal (PSS)/secondary synchronization signal (SSS), PBCH, channel state information reference signal (CSI-RS), control channel transmission such as PUCCH/PDCCH, physical data channel such as PUSCH/PDSCH, and uplink sounding reference signal (SRS) such as SRS transmission, channel sensing may be applied to determine the channel availability before the physical signal is transmitted using the channel.

The radio resource management (RRM) procedures in NR-U may be generally similar to those procedures in LTE LAA, since NR-U is aiming to reuse LAA/eLAA/feLAA technologies as much as possible to handle the coexistence between NR-U and other legacy radio access technologies (RATs). RRM measurements and report including special configuration procedure with respect the channel sensing and channel availability.

In the licensed spectrum, the wireless device measures Reference Signal Received Power (RSRP) and Reference Signal Received Quality (RSRQ) of the downlink radio channel and provides the measurement reports to its serving network node (e.g., eNB/gNB). However, the measurements may not reflect the interference strength on the carrier. Another metric Received Signal Strength Indicator (RSSI) can serve such a purpose. At the network node (e.g., eNB/gNB) side, it is possible to derive RSSI based on the received RSRP and RSRQ reports, however, this derivation may require that these reports be available. Due to the LBT failure, some reports in terms of RSRP or RSRQ may be blocked where such blockage can be either due to the reference signal transmission (DRS) being blocked in the downlink or the measurement report being blocked in the uplink, for example.

The measurements in terms of RSSI may be useful. The RSSI measurements together with the time information concerning when and a time period that wireless devices have made the measurements can assist the network node (e.g., gNB/eNB) to detect a hidden node. Additionally, the network node (e.g., gNB/eNB) can measure the load situation of the carrier which is useful for the network node to prioritize some channels for load balance and channel access failure avoidance purposes.

LTE LAA may support measurements of averaged RSSI and channel occupancy for measurement reports. The channel occupancy is defined as a percentage of time that RSSI was measured above a configured threshold. For this purpose, an RSSI measurement timing configuration (RMTC) includes a measurement duration (e.g., 1-5 ms) and a period between measurements (e.g., {40, 80, 160, 320, 640} ms).

Hence, channel access/selection for LAA was one of the aspects for co-existence with other RATs such as Wi-Fi. For instance, LAA has aimed to use carriers that are not congested with Wi-Fi.

### Channel access procedure in NR-U

Listen-before-talk (LBT) is designed for unlicensed spectrum co-existence with other RATs. In LBT, a radio device applies a clear channel assessment (CCA) check (i.e., channel sensing) before any transmission. The LBT procedure may use energy detection (ED) over a time period (a 'sensing slot') compared to a certain energy detection threshold (ED threshold) in order to determine if a channel is idle. In case the channel is determined to be occupied, the transmitter (e.g., wireless device, network node) performs a random back-off within a contention window before next CCA attempt. In order to protect the acknowledgement (ACK) transmissions, the transmitter (e.g., wireless device, network node) may defer a period after each busy CCA slot prior to resuming back-off. As soon as the transmitter (e.g., wireless device, network node) has grasped access to a channel, the transmitter (e.g., wireless device, network node) may only be allowed to perform transmission up to a maximum time duration (namely, the maximum channel occupancy time (MCOT)). For quality of service (QoS) differentiation, a channel access priority based on the service type has been defined. For example, four LBT priority classes are defined for differentiation of channel access priorities between services using different contention window sizes (CWS) and MCOT durations.

### CCA/LBT categories

As described above and in, for example, 3GPP TR 38.889, Listen-Before-Talk (LBT) is designed for unlicensed spectrum co-existence with other RATs and other wireless devices of the system and the medium. Under this mechanism, a radio device such as a wireless device applies a Clear Channel Assessment (CCA) check before any transmission. The transmitter (e.g., wireless device, network node) uses energy detection (ED) over a time period compared to a certain threshold (ED threshold) to determine if a channel is idle. Another CCA mechanism is to detect a known preamble.

In cases where the channel is determined to be occupied based on the CCA check, the transmitter (e.g., wireless device, network node) device performs a random back-off within a contention window before next CCA attempt.

To protect the ACK transmissions, the transmitter may defer a period after each busy CCA slot prior to resuming back-off. As soon as the transmitter (e.g., wireless device, network node) has grasped the channel, the transmitter (e.g., wireless device, network node) may only be allowed to perform transmission up to a maximum time duration called the Maximum Channel Occupancy time (MCOT). MCOT is configured per channel access priority class (p). For example, in wireless communication standards such as 3GPP TS 37.213 specifies the MCOT (*T_{ulm,cot,p}*) for UL transmission is specified as follows.

**Table 4.2.1-1 of, for example, 3GPP TS 37.213: Channel Access Priority Class for UL**

| **Channel Access Priority Class (*p*)** | ***mₚ*** | ***CW_{min,p}*** | ***CW_{max,p}*** | ***T_{ulm cot,p}*** | **allowed *CWₚ* sizes** |
|---|---|---|---|---|---|
| 1 | 2 | 3 | 7 | 2ms | {3,7} |
| 2 | 2 | 7 | 15 | 4ms | {7,15} |
| 3 | 3 | 15 | 1023 | 6ms or 10 ms | {15,31,63,127,255 ,511,1023} |
| 4 | 7 | 15 | 1023 | 6ms or 10 ms | {15,31,63,127,255 ,511,1023} |
| NOTE1: For *p* = 3,4, *T_{ulm cot,p}* = *10ms* if the higher layer parameter *absenceOfAnyOtherTechnology-r14* or *absenceOfAnyOtherTechnology*-r16 is provided, otherwise, *T_{ulm cot,p}* = 6*ms.* | | | | | |
| NOTE 2: When *T_{ulm cot,p}* = 6*ms* it may be increased to 8*ms* by inserting one or more gaps. The minimum duration of a gap shall be 100us. The maximum duration before including any such gap shall be 6*ms.* | | | | | |

For QoS differentiation, a channel access priority scheme based on the service type has been defined. For example, in LTE-LAA four CCA/LBT Channel Access Priority Classes (CAPCs) are defined for differentiation of contention window sizes (CWS) and MCOT between services. In LTE-LAA, the following mapping between CAPC and QCIs is defined in, for example, 3GPP TS 36.300:

| **Channel Access Priority Class (***p***)** | **QCI** |
|---|---|
| 1 | 1, 3, 5, 65, 66, 69,70 |
| 2 | 2, 7 |
| 3 | 4,6,8,9 |
| 4 | - |

Therefore, when scheduling UL/DL traffic, the network node may consider the QCI of the traffic to be transmitted. For uplink, the CAPC that the wireless devices needs to use for a given UL transmission is either signaled in the UL grant on the PDCCH for dynamic scheduling or indicated as part of a logical channel configuration for autonomous LTE-LAA UL transmissions. In the latter case, the wireless device may apply the CAPC indicated in the logical channel configuration when autonomously transmitting data from that logical channel. In case there are multiple MAC service data units (SDUs) multiplexed in the same MAC protocol data unit (PDU) and associated with different logical channels, the wireless device may apply the QCI associated with the lowest CAPC of all the logical channels included in the MAC PDU.

The channel access schemes for NR-based access for unlicensed spectrum can be classified into the following categories, for example:
Category 1: Immediate transmission after a switching gap no longer than 16 µs. This is used for a transmitter (e.g., wireless device, network node) to immediately transmit after a UL/DL switching gap inside a channel occupancy time (COT). A reason for the switching gap from reception to transmission is to accommodate the transceiver turnaround time or time to switch from reception to transmission or vice-versa.
Category 2: CCA/LBT without random back-off. The duration of time that the channel is sensed to be idle before the transmitting entity transmits is deterministic.
Category 3: CCA/LBT with random back-off with a contention window of fixed size. The CCA/LBT procedure has the following procedure as one of its components. The transmitting entity draws a random number N within a contention window. The size of the contention window is specified by the minimum and maximum value of N. The size of the contention window is fixed. The random number N is used in the CCA/LBT procedure to determine the duration of time that the channel is sensed to be idle before the transmitting entity transmits on the channel.
Category 4: CCA/LBT with random back-off with a contention window of variable size. The LBT procedure has the following as one of its components. The transmitting entity such as a wireless device that draws/determines/selects a random number N within a contention window. The size of a contention window is specified by the minimum and maximum value of the selectable random numbers. The transmitting entity can vary the size of the contention window when drawing the random number N. The random number N is used in the CCA/LBT procedure to determine the duration of time that the channel is sensed to be idle before the transmitting entity transmits on the channel.

However, the use of 2-step RACH and LBT in existing systems is not without issues. For example, the wireless device may need to perform UL LBT two times for 2-step RACH MsgA transmission: once before PRACH transmission and the other time before PUSCH if the time gap between resources for PRACH and PUSCH is large. More UL LBT attempts may decrease the probability to be successful in MsgA transmission in 2-step RACH. In other words, the existing solution for 2-step RACH may lead to higher probability of failure of MsgA transmission and therefore decreases the likelihood of using 2-step RACH on a carrier of shared spectrum, e.g., which is subject to LBT for transmission such as a carrier of unlicensed spectrum.

Further, when the network node configures both 2-step RACH and 4-step RACH for a wireless device, it is not defined which procedure, i.e., 2-step or 4-step RACH, the wireless device should use.

Prior art examples are: WO 2019/245779 A1; US 2019/132882 A1; and 3GPP TSG-RAN WG2 #109-e document R2-2001209, ERICSSON: "Gapless msgA transmissions in NR-U".

### SUMMARY

The scope of the present invention is defined in the appended independent claims. Specific embodiments of the present invention are defined in the dependent claims. In the followings some parts of the description, that are not covered by the claims, are considered background information that is useful for understanding the present invention.

The present invention is directed to a wireless device (claim 1), a method performed by said wireless device (independent claim 10) and a corresponding network node (independent claim 13) for adapting a timing gap for a random access procedure and/or selecting a random access procedure type to implement.

According to one or more embodiments, the network node adapts the time gap (Tg) between resources used for PRACH and PUSCH transmissions in MsgA on a carrier for 2-step RACH based at least on whether the carrier is subject to LBT. The adaptation of the time gap on a carrier subject to LBT depends on one or more parameters related to LBT operation, e.g., channel occupancy time (COT), LBT failure statistics, etc. For example:
- The adaptation or modification of the time gap depends on COT configured for unlicensed carrier; and/or
- The adaptation or modification of the time gap depends on a relation between a number of UL LBT failures and one or more thresholds.

According one or more embodiments performed at the wireless device, the wireless device is configured by the network node with a rule indicating what gap to use for the transmission of PRACH and PUSCH in MsgA. The rule specifies the value of Tg, which depends on COT, UL LBT failures, as mentioned above. In one example, the wireless device autonomously determines Tg value from a set of possible values based on COT, UL LBT failures and performs the random access accordingly. The wireless device can also be pre-defined by the network node to use a certain Tg based on the criteria.

According to another embodiment, when the network node may configure 2 RA types, i.e., 2-step RACH and 4-step RACH, then the wireless device may select the RA type depending on or at least based on 1) the configured time gap (tg) between PRACH and PUSCH transmissions in 2-step RACH MsgA, and/or 2) a relation between the number of UL LBT failures for random access procedures and a threshold. The wireless device may use the selected type of the RA for performing random access in a cell operating on a carrier subject to LBT.

Some NR-U wireless device implementations may require a delay between PRACH and PUSCH. This delay increases the amount of time needed to transmit the PRACH and PUSCH, and so a larger COT may be needed for such wireless devices. Therefore, in another embodiment, a wireless device adapts a random access procedure according to a channel occupancy time. The wireless device may determine a channel occupancy time for a transmission by the wireless device using shared channel access. When the combined duration of the random access preamble, the PO, and a minimum delay is not greater than the channel occupancy time, the wireless device may transmit the PRACH and a PUSCH in the PO such that the random access preamble is followed by the PUSCH at a delay not less than the minimum delay, wherein the combined duration comprises the time from the start of the preamble to the end of the PO. When the combined duration of a PRACH, the PO, and the minimum delay for a wireless device is greater than the channel occupancy time, the wireless device may transmit the random access preamble in the RO. In some such embodiments, the minimum preamble-RO delay is a wireless device capability. In these embodiments, the wireless device may be identified as supporting transmission of the random access preamble followed by a PUSCH at a delay not less than the minimum delay.

Therefore, one or more embodiments of the disclosure advantageously provides for one or more of:
- More random access success probability in unlicensed carrier.
- Reduces random access transmission duration on carrier belonging to the shared spectrum, i.e., when shared spectrum channel access is applied.
- Random access resources are more efficiently utilized in a cell subject to LBT for access
- The resources in the shared spectrum are efficiently used.
- Wireless devices with different capability for RO-PO delay can be supported in a cell.

According to one aspect of the disclosure, a wireless device is provided. The wireless device includes processing circuitry configured to select one of a plurality of random access procedure types based on at least one of a quantity of clear channel assessment, CCA, failures associated with random access attempts and a time gap between a physical random access channel, PRACH, resources and physical uplink shared channel, PUSCH, resources. The processing circuitry is further configured to perform a random access procedure one of based on and using the selected one of the plurality of random access procedure types.

According to one or more embodiments of this aspect, the quantity of CCA failures associated with random access attempts is a property associated with message A of a two step random access procedure type. According to one or more embodiments of this aspect, the quantity of CCA failures associated with random access attempts is a property associated with message 1 of a four step random access procedure type. According to one or more embodiments of this aspect, the processing circuitry is further configured to detect a CCA failure and increment the quantity of CCA failures associated with the random access attempts by a predefined amount.

According to one or more embodiments of this aspect, the processing circuitry is further configured to receive an indication of a predefined quantity threshold, and trigger the selection of one of the plurality of random access procedure types based at least on the quantity of CCA failures exceeding the predefined quantity threshold. According to one or more embodiments of this aspect, each of the CCA failures corresponds to a listen before talk, LBT, failure. According to one or more embodiments of this aspect, the processing circuitry is further configured to receive an indication of a predefined time gap threshold, and trigger the selection of one of the plurality of random access procedure types based at least on the time gap between the PRACH resources and PUSCH resources exceeding the predefined time gap threshold.

According to one or more embodiments of this aspect, the time gap is configured based at least on a channel occupancy time. According to one or more embodiments of this aspect, the processing circuitry is configured to receive an indication of a plurality of time gaps between PRACH resources and PUSCH resources, and select one of the plurality of time gaps to implement based at least on the quantity of CCA failures. According to one or more embodiments of this aspect, the plurality of random access procedure types includes a two step random access procedure type and a four step random access procedure type. According to another aspect of the disclosure, a network node configured to communicate with a wireless device is provided. The network node includes processing circuitry configured to configure the wireless device with at least one of a predefined quantity threshold for comparison with a quantity of clear channel assessment, CCA, failures, and a predefined time gap threshold for comparison with a time gap between physical random access channel, PRACH, resources and physical uplink shared channel, PUSCH, resources. The processing circuitry is further configured to receive random access procedure signaling of one of a plurality of random access procedures types based on at least one of the predefined quantity threshold and predefined time gap threshold being exceeded.

According to one or more embodiments of this aspect, the quantity of CCA failures associated with random access attempts is a property associated with message A of a two step random access procedure type. According to one or more embodiments of this aspect, the quantity of CCA failures associated with random access attempts is a property associated with message 1 of a four step random access procedure type. According to one or more embodiments of this aspect, each of the CCA failures corresponds to a listen before talk, LBT, failure.

According to one or more embodiments of this aspect, the time gap is configured based at least on a channel occupancy time. According to one or more embodiments of this aspect, the processing circuitry is configured to transmit an indication of a plurality of time gaps between PRACH resources and PUSCH resources for selection by the wireless device based at least on the quantity of CCA failures. According to one or more embodiments of this aspect, the plurality of random access procedure types includes a two step random access procedure type and a four step random access procedure type.

According to another aspect of the disclosure, a method implemented by a wireless device is provided. One of a plurality of random access procedure types is selected based on at least one of a quantity of clear channel assessment, CCA, failures associated with random access attempts, and a time gap between a physical random access channel, PRACH, resources and physical uplink shared channel, PUSCH, resources. A random access procedure is performed one of based on and using the selected one of the plurality of random access procedure types is implemented.

According to one or more embodiments of this aspect, the quantity of CCA failures associated with random access attempts is a property associated with message A of a two step random access procedure type. According to one or more embodiments of this aspect, the quantity of CCA failures associated with random access attempts is a property associated with message 1 of a four step random access procedure type. According to one or more embodiments of this aspect, a CCA failure is detected and the quantity of CCA failures associated with the random access attempts is incremented by a predefined amount.

According to one or more embodiments of this aspect, an indication of a predefined quantity threshold is received. The selection of one of the plurality of random access procedure types is triggered based at least on the quantity of CCA failures exceeding the predefined quantity threshold. According to one or more embodiments of this aspect, each of the CCA failures corresponds to a listen before talk, LBT, failure. According to one or more embodiments of this aspect, an indication of a predefined time gap threshold is received. The selection of one of the plurality of random access procedure types is triggered based at least on the time gap between the PRACH resources and PUSCH resources exceeding the predefined time gap threshold.

According to one or more embodiments of this aspect, the time gap is configured based at least on a channel occupancy time. According to one or more embodiments of this aspect, an indication of a plurality of time gaps between PRACH resources and PUSCH resources is received. One of the plurality of time gaps to implement is selected based at least on the quantity of CCA failures. According to one or more embodiments of this aspect, the plurality of random access procedure types includes a two step random access procedure type and a four step random access procedure type.

According to another aspect of the disclosure, a method implemented by a network node that is configured to communicate with a wireless device is provided. The wireless device is configured with at least one of a predefined quantity threshold for comparison with a quantity of clear channel assessment, CCA, failures, and a predefined time gap threshold for comparison with a time gap between physical random access channel, PRACH, resources and physical uplink shared channel, PUSCH, resources. Random access procedure signaling of one of a plurality of random access procedures types is received based on at least one of the predefined quantity threshold and predefined time gap threshold being exceeded.

According to one or more embodiments of this aspect, the quantity of CCA failures associated with random access attempts is a property associated with message A of a two step random access procedure type. According to one or more embodiments of this aspect, the quantity of CCA failures associated with random access attempts is a property associated with message 1 of a four step random access procedure type. According to one or more embodiments of this aspect, each of the CCA failures corresponds to a listen before talk, LBT, failure.

According to one or more embodiments of this aspect, the time gap is configured based at least on a channel occupancy time. According to one or more embodiments of this aspect, an indication is transmitted of a plurality of time gaps between PRACH resources and PUSCH resources for selection by the wireless device based at least on the quantity of CCA failures. According to one or more embodiments of this aspect, the plurality of random access procedure types includes a two step random access procedure type and a four step random access procedure type.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a signaling diagram of a 4-step RACH procedure;
FIG. 2 is a signaling diagram of 2-step RA;
FIG. 3 is a diagram illustrating PRACH and PUSCH slots;
FIG. 4 is a schematic diagram of an exemplary network architecture illustrating a communication system connected via an intermediate network to a host computer according to the principles in the present disclosure;
FIG. 5 is a block diagram of a network node and wireless device according to the present disclosure;
FIG. 6 is a flowchart of an exemplary process in a network node;
FIG. 7 is a flowchart of another exemplary process in a network node;
FIG. 8 is a flowchart of an exemplary process in a wireless device;
FIG. 9 is a flowchart of another exemplary process in a wireless device;
FIG. 10 is a diagram of a configuration of Tg depending on COT according to the present disclosure;
FIG. 11 is a diagram of an example MsgA configuration - Tg = Tg1 applied if N <H1 according to the present disclosure; and
FIG. 12 is a diagram of an example MsgA configuration - Tg = Tg2 applied if H1 ≤ N < H2 according to the present disclosure.

### DETAILED DESCRIPTION

Before describing in detail exemplary embodiments, it is noted that the embodiments reside primarily in combinations of apparatus components and processing steps related to adapting a timing gap for a random access procedure and/or selecting a random access procedure type to implement. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), network controller, central unit (e.g. in a gNB), distributed unit (e.g., in a gNB), baseband unit, centralized baseband, C-RAN, integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (e.g., MME, MSC, etc.), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), O&M, OSS, SON, positioning node (e.g., E-SMLC), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be another type of node and/or any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments, the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

The term radio access technology, or RAT, may refer to any RAT, e.g., UTRA, E-UTRA, narrow band internet of things (NB-IoT), WiFi, Bluetooth, next generation RAT, New Radio (NR), 4G, 5G, etc. Any of the equipment denoted by the terms node, wireless device, network node or radio network node may be capable of supporting a single or multiple RATs.

The term signal used herein can be any physical signal or physical channel. Examples of physical signals are reference signal such as PSS, SSS, CSI-RS, DMRS, signals in SSB, CRS, PRS, SRS, etc. The term physical channel used herein is also called as 'channel', which contains higher layer information. Examples of physical channels are MIB, PBCH, NPBCH, PDCCH, PDSCH, sPUCCH, sPDSCH, sPUSCH, MPDCCH, NPDCCH, NPDSCH, E-PDCCH, PUSCH, PUCCH, NPUSCH, etc.

The term time resource used herein may correspond to any type of physical resource or radio resource expressed in terms of length of time. Examples of time resources are: symbol, time slot, subframe, radio frame, TTI, interleaving time, etc. The term TTI used herein may correspond to any time period (T0) over which a physical channel can be encoded and optionally interleaved for transmission. The physical channel is decoded by the receiver over the same time period (T0) over which it was encoded. The TTI may also interchangeably called as short TTI (sTTI), transmission time, slot, sub-slot, mini-slot, mini-subframe, etc.

The term time-frequency resource used herein for any radio resource is defined in any time-frequency resource grid in a cell. Examples of time-frequency resource are resource block, subcarrier, resource block (RB) etc. The RB may also be interchangeably called as physical RB (PRB), virtual RB (VRB), etc.

The term "quantity" may be used interchangeably with "number" in one or more embodiments. For example, a quantity of CCA failures may correspond to a number of CCA failures.

The term listen-before-talk (LBT) as used herein may correspond to DL LBT, UL LBT, or both. LBT is also interchangeably and more generally called as clear channel assessment (CCA), carrier sense multiple access (CSMA) procedure, channel assessment scheme, shared spectrum channel access etc. The CCA based operation is more generally called contention-based operation. The transmission of signals on a carrier subjected to CCA is also called contention-based transmission. The contention-based operation is typically used for transmission on carriers of unlicensed frequency band. But this mechanism may also be applied for operating on carriers belonging to licensed band for example to reduce interference. The transmission of signals on a carrier which is not subjected to CCA is also called contention free transmission. As used herein, a CCA failure may correspond to sensing a channel is not clear during the CCA or detecting energy above a threshold during the CCA. As used herein, a random access attempt may correspond to initiating a random access procedure and performing CCA before determining whether to transmit random access signaling associated with the random access procedure. The random access attempt may fail if CCA fails.

An indication generally may explicitly and/or implicitly indicate the information it represents and/or indicates. Implicit indication may for example be based on position and/or resource used for transmission. Explicit indication may for example be based on a parametrization with one or more parameters, and/or one or more index or indices, and/or one or more bit patterns representing the information.

A cell may be generally a communication cell, e.g., of a cellular or mobile communication network, provided by a node. A serving cell may be a cell on or via which a network node (the node providing or associated to the cell, e.g., base station, gNB or eNodeB) transmits and/or may transmit data (which may be data other than broadcast data) to a user equipment, in particular control and/or user or payload data, and/or via or on which a user equipment transmits and/or may transmit data to the node; a serving cell may be a cell for or on which the user equipment is configured and/or to which it is synchronized and/or has performed an access procedure, e.g., a random access procedure, and/or in relation to which it is in a RRC_connected or RRC_idle state, e.g., in case the node and/or user equipment and/or network follow the LTE-standard. One or more carriers (e.g., uplink and/or downlink carrier/s and/or a carrier for both uplink and downlink) may be associated to a cell.

Transmitting in downlink may pertain to transmission from the network or network node to the wireless device. Transmitting in uplink may pertain to transmission from the wireless device to the network or network node. Transmitting in sidelink may pertain to (direct) transmission from one wireless device to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Configuring a terminal or wireless device or node may involve instructing and/or causing the wireless device or node to change its configuration, e.g., at least one setting and/or register entry and/or random access procedure configurations. A terminal or wireless device or node may be adapted to configure itself, e.g., according to information or data in a memory of the terminal or wireless device. Configuring a node or terminal or wireless device by another device or node or a network may refer to and/or comprise transmitting information and/or data and/or instructions to the wireless device or node by the other device or node or the network, e.g., allocation data (which may also be and/or comprise configuration data) and/or scheduling data and/or scheduling grants. Configuring a terminal may include sending allocation/configuration data to the terminal indicating which modulation and/or encoding to use. A terminal may be configured with and/or for scheduling data and/or to use, e.g., for transmission, scheduled and/or allocated uplink resources, and/or, e.g., for reception, scheduled and/or allocated downlink resources. Uplink resources and/or downlink resources may be scheduled and/or provided with allocation or configuration data.

A licensed band or spectrum may be a part of the frequency spectrum that is and/or has to be licensed for use, e.g. by a telecommunications operator. An unlicensed band or spectrum may be a part of the frequency spectrum that is available without such license. WLAN/WiFi usually uses such unlicensed bands. The requirements for using licensed bands are usually quite different from unlicensed bands, e.g. due to licensed bands being controlled by one operator, whereas unlicensed bands usually are not subject to a centralized operator. Thus, LBT procedures are usually required for unlicensed bands, which may be adapted to facilitate fair distribution of access to the unlicensed spectrum.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

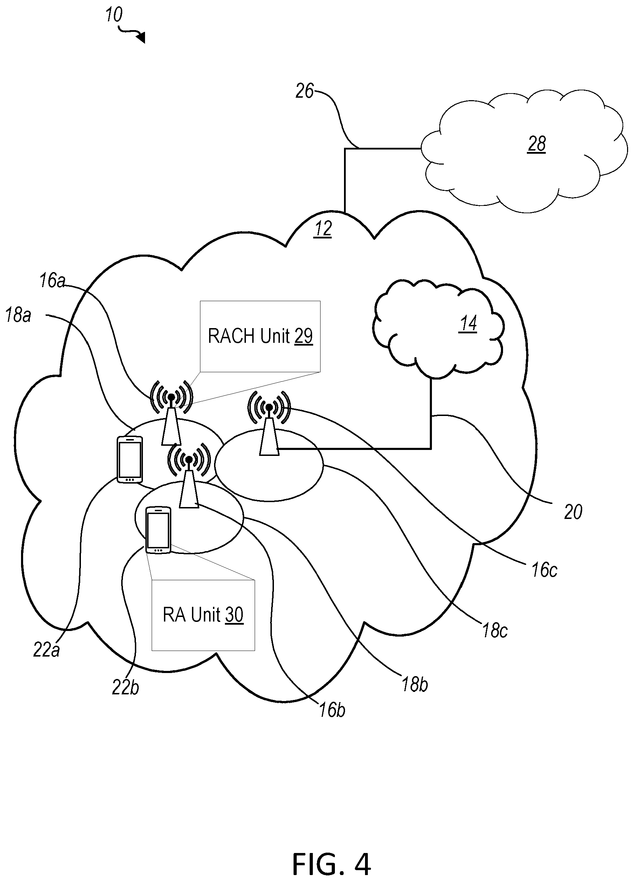

Embodiments may provide for adapting a timing gap for a random access procedure and/or selecting a random access procedure type to implement. Referring again to the drawing figures, in which like elements are referred to by like reference numerals, there is shown in FIG. 4 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The intermediate network 28 may be one of, or a combination of more than one of, a public, private or hosted network. The intermediate network 28, if any, may be a backbone network or the Internet. In some embodiments, the intermediate network 28 may comprise two or more sub-networks (not shown) and may communicate with access network 12 via communication link 26.

The communication system of FIG. 4 as a whole enables connectivity between one of the connected WDs 22a, 22b and the network node 16. A network node 16 is configured to include a random access channel (RACH) unit 29 which is configured to perform one or more network node 16 functions as described herein such as with respect to adapting a timing gap for a random access procedure and/or selecting a random access procedure type to implement. A wireless device 22 is configured to include a random access (RA) unit 30 which is configured to perform one or more wireless device 22 function as described herein such as with respect to adapting a timing gap for a random access procedure and/or selecting a random access procedure type to implement.

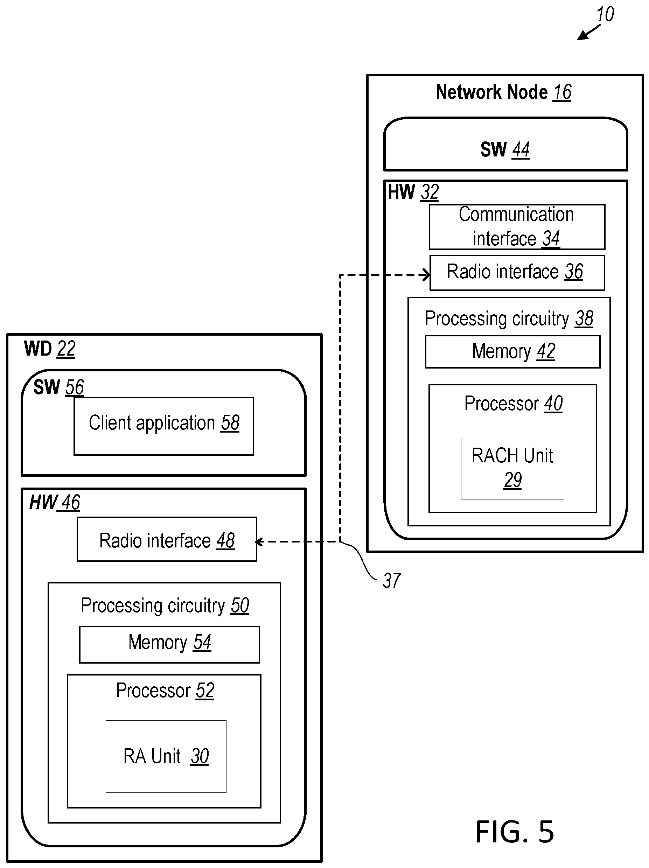

Example implementations, in accordance with an embodiment, of the WD 22 and network node 16 discussed in the preceding paragraphs will now be described with reference to FIG. 5.

The communication system 10 includes a network node 16 provided in a communication system 10 and including hardware 32 enabling it to communicate with other network nodes 16 and with the WD 22. The hardware 32 may include a communication interface 34 for setting up and maintaining a wired or wireless connection with an interface of a different communication device of the communication system 10, as well as a radio interface 36 for setting up and maintaining at least a wireless connection 37 with a WD 22 located in a coverage area 18 served by the network node 16. The radio interface 36 may be formed as or may include, for example, one or more RF transmitters, one or more RF receivers, and/or one or more RF transceivers. The communication interface 34 may be configured to facilitate a connection 66 to other network nodes 16, for example.

In the embodiment shown, the hardware 32 of the network node 16 further includes processing circuitry 38. The processing circuitry 38 may include a processor 40 and a memory 42. In particular, in addition to or instead of a processor, such as a central processing unit, and memory, the processing circuitry 38 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 40 may be configured to access (e.g., write to and/or read from) the memory 42, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 44 stored internally in, for example, memory 42, or stored in external memory (e.g., database, storage array, network storage device, etc.) accessible by the network node 16 via an external connection. The software 44 may be executable by the processing circuitry 38. The processing circuitry 38 may be configured to control any of the methods and/or processes described herein and/or to cause such methods, and/or processes to be performed, e.g., by network node 16. Processor 40 corresponds to one or more processors 40 for performing network node 16 functions described herein. The memory 42 is configured to store data, programmatic software code and/or other information described herein. In some embodiments, the software 44 may include instructions that, when executed by the processor 40 and/or processing circuitry 38, causes the processor 40 and/or processing circuitry 38 to perform the processes described herein with respect to network node 16. For example, processing circuitry 38 of the network node 16 may include RACH unit 29 that is configured to perform one or more network node 16 function as described herein such as with respect to adapting a timing gap for a random access procedure and/or selecting/configurating a random access procedure type to implement.

The communication system 10 further includes the WD 22 already referred to. The WD 22 may have hardware 46 that may include a radio interface 48 configured to set up and maintain a wireless connection 37 with a network node 16 serving a coverage area 18 in which the WD 22 is currently located. The radio interface 48 may be formed as or may include, for example, one or more RF transmitters, one or more RF receivers, and/or one or more RF transceivers.

The hardware 46 of the WD 22 further includes processing circuitry 50. The processing circuitry 50 may include a processor 52 and memory 54. In particular, in addition to or instead of a processor, such as a central processing unit, and memory, the processing circuitry 50 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 52 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 56, which is stored in, for example, memory 54 at the WD 22, or stored in external memory (e.g., database, storage array, network storage device, etc.) accessible by the WD 22. The software 56 may be executable by the processing circuitry 50. The software 56 may include a client application 58. The client application 58 may be operable to provide a service to a human or non-human user via the WD 22. The client application 58 may interact with the user to generate the user data that it provides.

The processing circuitry 50 may be configured to control any of the methods and/or processes described herein and/or to cause such methods, and/or processes to be performed, e.g., by WD 22. The processor 52 corresponds to one or more processors 52 for performing WD 22 functions described herein. The WD 22 includes memory 54 that is configured to store data, programmatic software code and/or other information described herein. In some embodiments, the software 56 and/or the client application 58 may include instructions that, when executed by the processor 52 and/or processing circuitry 50, causes the processor 52 and/or processing circuitry 50 to perform the processes described herein with respect to WD 22. For example, the processing circuitry 50 of the wireless device 22 may include a RA unit 30 configured to perform one or more wireless device 22 functions described herein such as with respect to adapting a timing gap for a random access procedure and/or selecting a random access procedure type to implement.

In some embodiments, the inner workings of the network node 16 and WD 22 may be as shown in FIG. 5 and independently, the surrounding network topology may be that of FIG. 4. The wireless connection 37 between the WD 22 and the network node 16 is in accordance with the teachings of the embodiments described throughout this disclosure. Although FIGS. 4 and 5 show various "units" such as RACH unit 29 and RA unit 30 as being within a respective processor, it is contemplated that these units may be implemented such that a portion of the unit is stored in a corresponding memory within the processing circuitry. In other words, the units may be implemented in hardware or in a combination of hardware and software within the processing circuitry.

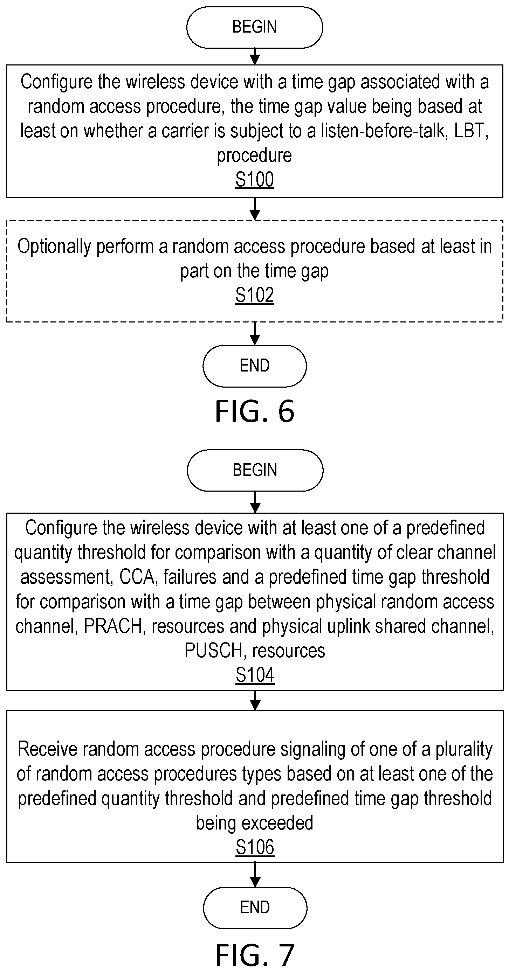

FIG. 6 is a flowchart of an exemplary process in a network node 16 according to some embodiments of the present disclosure. One or more Blocks and/or functions performed by network node 16 may be performed by one or more elements of network node 16 such as by RACH unit 29 in processing circuitry 38, processor 40, radio interface 36, etc. In one or more embodiments, network node 16 such as via one or more of processing circuitry 38, processor 40, RACH unit 29, communication interface 34 and radio interface 36 is configured to configure (Block S100) the wireless device with a time gap associated with a random access procedure where the time gap value is based at least on whether a carrier is subject to a listen-before-talk, LBT, procedure, as described herein. In one or more embodiments, network node 16 such as via one or more of processing circuitry 38, processor 40, RACH unit 29, communication interface 34 and radio interface 36 is configured to optionally perform (Block S102) a random access procedure based at least in part on the time gap, as described herein.

According to one or more embodiments, the time gap is between resources used for PRACH and PUSCH transmissions in 2-step RACH. According to one or more embodiments, the time gap is further based on at least one parameter of the LBT procedure. According to one or more embodiments, the at least one parameter is based at least on one of a channel occupancy time, COT, LBT failure statistics and whether the COT is configured for an unlicensed carrier.

According to one or more embodiments, the processing circuitry 38 is configured to configure the wireless device 22 with 4-step RACH and the 2-step RACH. According to one or more embodiments, the processing circuitry 38 is further configured to configure with wireless device 22 with additional time gaps between resources used for PRACH and PUSCH transmissions in 2-step RACH for selection by the wireless device 22.

FIG. 7 is a flowchart of an exemplary process in a network node 16 according to some embodiments of the present disclosure. One or more Blocks and/or functions performed by network node 16 may be performed by one or more elements of network node 16 such as by RACH unit 29 in processing circuitry 38, processor 40, radio interface 36, etc. In one or more embodiments, network node 16 is configured to configure (Block S104) the wireless device 22 with at least one of: a predefined quantity threshold for comparison with a quantity of clear channel assessment, CCA, failures, and a predefined time gap threshold for comparison with a time gap between physical random access channel, PRACH, resources and physical uplink shared channel, PUSCH, resources, as described herein. The network node 16 is configured to receive (Block S106) random access procedure signaling of one of a plurality of random access procedures types based on at least one of the predefined quantity threshold and predefined time gap threshold being exceeded, as described herein.

According to one or more embodiments, the quantity of CCA failures associated with random access attempts is a property associated with message A of a two step random access procedure type, as described herein. According to one or more embodiments, the quantity of CCA failures associated with random access attempts is a property associated with message 1 of a four step random access procedure type, as described herein. According to one or more embodiments, each of the CCA failures corresponds to a listen before talk, LBT, failure, as described herein.

According to one or more embodiments, the time gap is configured based at least on a channel occupancy time, as described herein. According to one or more embodiments, the processing circuitry 38 is configured to transmit an indication of a plurality of time gaps between PRACH resources and PUSCH resources for selection by the wireless device 22 based at least on the quantity of CCA failures. According to one or more embodiments, the plurality of random access procedure types includes a two step random access procedure type and a four step random access procedure type.

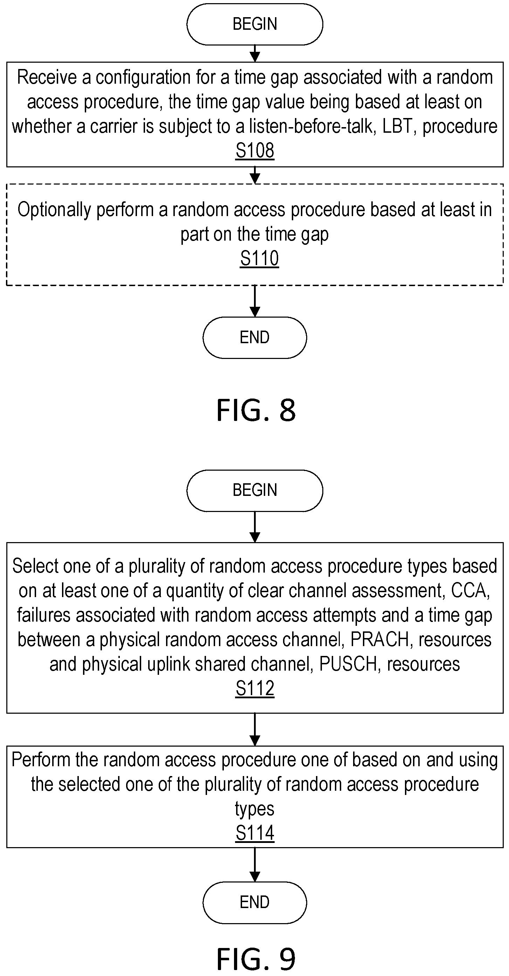

FIG. 8 is a flowchart of an exemplary process in a wireless device 22 according to some embodiments of the present disclosure. One or more Blocks and/or functions performed by wireless device 22 may be performed by one or more elements of wireless device 22 such as by RA unit 30 in processing circuitry 50, processor 52, radio interface 48, etc. In one or more embodiments, wireless device such as via one or more of processing circuitry 50, processor 52, RA unit 30 and radio interface 48 is configured to receive (Block S108) a configuration for a time gap associated with a random access procedure where the time gap value is based at least on whether a carrier is subject to a listen-before-talk, LBT, procedure, as described herein. In one or more embodiments, wireless device 22 such as via one or more of processing circuitry 50, processor 52, RA unit 30 and radio interface 48 is configured to optionally perform (Block S110) a random access procedure based at least in part on the time gap, as described herein.

According to one or more embodiments, the time gap is between resources used for PRACH and PUSCH transmissions in 2-step RACH. According to one or more embodiments, the time gap is further based on at least one parameter of the LBT procedure. According to one or more embodiments, the at least one parameter is based at least on one of a channel occupancy time, COT, LBT failure statistics and whether the COT is configured for an unlicensed carrier. According to one or more embodiments, the processing circuitry 50 is further configured to receive a configuration for 4-step RACH and the 2-step RACH, and one of select and switch between the 4-step RACH and the 2-step RACH based at least in part on the at least one parameter. According to one or more embodiments, the processing circuitry 50 is further configured to receive configurations for additional time gaps between resources used for PRACH and PUSCH transmissions in 2-step RACH, and select among the time gaps for implementation for the random access procedure.

FIG. 9 is a flowchart of another example process in a wireless device 22 according to some embodiments of the present disclosure. One or more Blocks and/or functions performed by wireless device 22 may be performed by one or more elements of wireless device 22 such as by RA unit 30 in processing circuitry 50, processor 52, radio interface 48, etc. In one or more embodiments, wireless device 22 is configured to select (Block S112) one of a plurality of random access procedure types based on at least one of: a quantity of clear channel assessment, CCA, failures associated with random access attempts, and a time gap between a physical random access channel, PRACH, resources and physical uplink shared channel, PUSCH, resources, as described herein. The wireless device 22 is further configured to perform (Block S114) a random access procedure one of based on and using the selected one of the plurality of random access procedure types.

According to one or more embodiments, the quantity of CCA failures associated with random access attempts is a property associated with message A of a two step random access procedure type, as described herein. According to one or more embodiments, the quantity of CCA failures associated with random access attempts is a property associated with message 1 of a four step random access procedure type, as described herein. According to one or more embodiments, the processing circuitry 50 is further configured to detect a CCA failure and increment the quantity of CCA failures associated with the random access attempts by a predefined amount, as described herein.

According to one or more embodiments, the processing circuitry 50 is further configured to: receive an indication of a predefined quantity threshold, and trigger the selection of one of the plurality of random access procedure types based at least on the quantity of CCA failures exceeding the predefined quantity threshold, as described herein. According to one or more embodiments, each of the CCA failures corresponds to a listen before talk, LBT, failure. According to one or more embodiments, the processing circuitry 50 is further configured to: receive an indication of a predefined time gap threshold, and trigger the selection of one of the plurality of random access procedure types based at least on the time gap between the PRACH resources and PUSCH resources exceeding the predefined time gap threshold, as described herein.

According to one or more embodiments, the time gap is configured based at least on a channel occupancy time. According to one or more embodiments, the processing circuitry 50 is configured to: receive an indication of a plurality of time gaps between PRACH resources and PUSCH resources, and select one of the plurality of time gaps to implement based at least on the quantity of CCA failures. According to one or more embodiments, the plurality of random access procedure types includes a two step random access procedure type and a four step random access procedure type.

Having generally described arrangements for adapting a timing gap for a random access procedure and/or selecting a random access procedure type to implement, details for these arrangements, functions and processes are provided as follows, and which may be implemented by the network node 16 and/or wireless device 22.

Embodiments provide adapting a timing gap for a random access procedure and/or selecting a random access procedure type to implement. One or more network node 16 functions described below may be performed by one or more of processing circuitry 38, processor 40, radio interface 36, RACH unit 29, etc. One or more wireless device 22 functions described below may be performed by one or more of processing circuitry 50, processor 52, radio interface 48, RA unit 30, etc.

### Scenario for 2-step RACH based random access procedure for unlicensed carrier

The scenario comprises a wireless device 22 intending to transmit random access to a first cell (cell1), which in turn is managed or served or operated by a first network node 16 (NN1). The wireless device 22 may or may not be served by cell1. In one example, cell1 is a target cell of the wireless device 22, e.g., for performing RA at cell change procedure, at cell selection, etc. Examples of cell change procedures are cell re-selection, RRC re-establishment, handover, random access, etc.

In another example, cell1 is also a serving cell of the wireless device 22, e.g., for performing RA for beam recovery, etc. In yet another example, cell1 is the serving cell of the wireless device 22, e.g., when performing random access as part of the RRC re-establishment upon radio link failure (RLF) declaration and expiry of T310 timer where a T310 is a predefined timer known in the art. Cell1 is being operated on a carrier belonging to a spectrum whose access may require the radio node (e.g., wireless device 22, network node 16) to apply a CCA operation, e.g., LBT. In one example, the spectrum is a shared spectrum. An example of the shared spectrum is a carrier of an unlicensed band or spectrum. The wireless device 22 may be required to perform UL LBT before the channel access and the first network node 16 (NN1) may be required to perform DL LBT before the channel access on unlicensed band.

The wireless device 22 is configured to use 2-step RACH (i.e., 2-step RA type or Type-2 random access procedure) and 4-step RACH (i.e., 4-step RA type or Type-1 random access procedure) for the random access procedure.

The network node 16 configures the maximum channel occupancy time (COT or MCOT) for shared channel access operation. COT and MCOT are interchangeably used herein. The value of COT may depend on local regulation in a region, e.g., is based at least on the deployed country or region. Alternatively, the wireless device 22 obtains information about the COT/MCOT based on, e.g., channel access schemes type, LBT type.

The random access procedure may be required, for example, when the wireless device 22 accesses the cell for performing one or more procedures related to cell change. Examples of such procedures are cell selection, cell reselection, handover, RRC re-establishment, or RRC connection release with redirection, configuration or change of special cell (SpCell) in multi-connectivity (e.g., addition of PSCell, PSCell change etc.). In another example, the random access may be required to indicate a beam recovery procedure, scheduling request (SR). In yet another example, the random access may be required to assist the NN1 (e.g., serving network node 16) to estimate the propagation delay between the wireless device 22 and the NN1. This in turn is used for adapting the timing advance command for the wireless device 22.

### Methods for adapting a gap between PRACH and PUSCH in Message A (MsgA) transmission

In one embodiment, the network node 16 (NN) adapts a time gap (Tg) between time resources for PRACH and PUSCH transmission in MsgA for 2-step RACH based on whether the carrier is subject to LBT or not, based on LBT type.

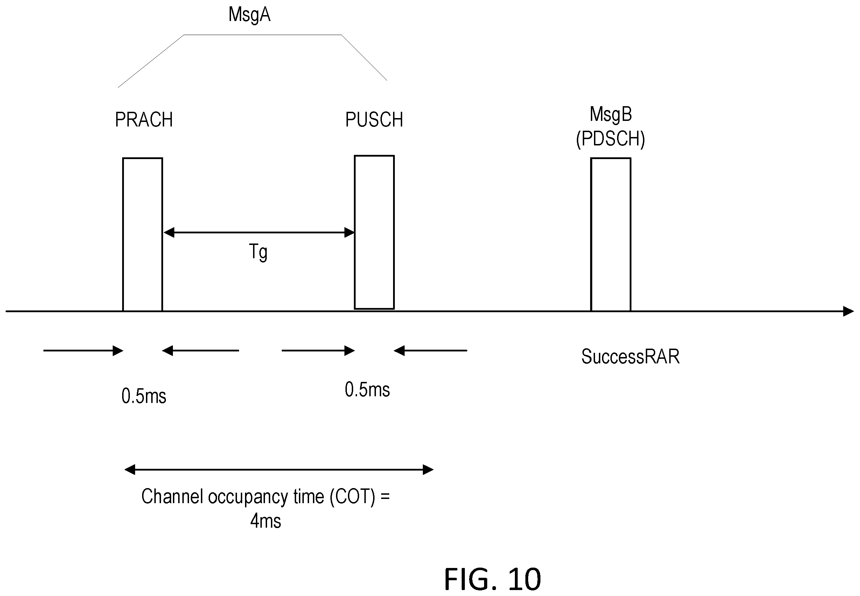

For example, the network node 16 configures Tg depending on the COT configured for operated unlicensed carrier. For example, the network node 16 selects Tg so that the total transmission time of MsgA does not exceed COT. Consider one slot length is 0.5ms, e.g., for subcarrier spacing (SCS) of 30 kHz. If PRACH transmission period is 0.5ms, and PUSCH transmission period is 0.5ms, and COT=4ms, the network node 16 sets the time gap up to 3ms, which corresponds to 6 slots with SCS=30kHz. FIG. 10 illustrates this configuration as an example.

In one or more embodiments, the relation between Tg and COT can be determined by a rule. The rule can be pre-defined or the wireless device 22 can be configured by the network node 16, e.g., by sending a message to the wireless device 22. In the former case as an example, the wireless device 22 upon determining the COT may also determine Tg. In yet another example, even if the relation between Tg and COT is pre-defined (e.g., by a rule) the network node 16 may still be able to adapt the value of Tg, e.g., to a value smaller than the pre-defined Tg. In one or more embodiments, the network node 16 may adapt the time gap (Tg) based on information related to CCA operational result or the outcome of the CCA operations performed in a network node 16, e.g., in the serving base station of the wireless device, prior to an attempt to transmit a DL signal or message. For example, the CCA operations are performed by the network node 16 prior to transmitting signals in the downlink. The CCA operational results may include results of CCA failure or CCA success. The CCA operational results can be obtained by the network node 16 over a certain time period (T0). In this case, the wireless device 22 adapts the Tg based on CCA operational results. In one example, if CCA operational results indicate a high failure rate, then Tg is set to a larger value compared to the case when CCA operational results indicate low failure rate. By setting a large gap, the probability of LBT success increases, meaning that the wireless device 22 is more likely to succeed with the transmissions contained in MsgA. In a similar way, if the CCA operational results indicate low failure rate (i.e., failure rate below a threhsold), then the network node 16 may select a smaller gap, preferably within the COT. This may reduce the number of CCA evaluations in the wireless device 22 as the transmission may take place within the COT or close to each other. Another advantage is that MsgA is transmitted faster.

In one or more embodiments, the wireless device 22 may select a gap based on the received CCA operational results, which can be, e.g., broadcast in system information. In one example, the selection of Tg is be based on CCA operational results sent out in information element (IE) "AvailableRB-SetPerCell" or the like which indicates the availability of RBs of a serving cell operating in a carrier subject to CCA. As used herein in one or more embodiments, CCA operational results include or correspond to CCA failures that may correspond to LBT failures.

In one or more embodiments, the network node 16 configures the wireless device 22 with one or more values for one or more time gaps, and the wireless device 22 selects the time gap based on one or more of the UL LBT status, CCA operational results (as described above) received from other nodes such as other network nodes 16. For example, the wireless device 22 may receive information about the CCA operational results that may include results of CCA failure or CCA success from the serving network node 16 and this information can be used for selecting one of multiple time gaps.

For example, the network node 16 configures M MsgA configurations and each configuration has different time gap length, e.g., (Tg1, Tg2, ..., TgM), where Tg1 < Tg2 < ... <TgM. Moreover, the network node 16 configures thresholds (H1, H2, ..., HM-1), where H1 < H2 < ... < HM-1, to enable the wireless device 22 to choose a particular value of Tg. N indicates the number or rate of LBT failures where one or more configured thresholds may be compared to N as shown in the example of Table 1. The network node 16 can store such a set of MsgA configurations in a form of table as shown in Table 1, below, for example. The network node 16 can signal such a table to the wireless device 22, e.g., via RRC signaling. In another example, this configuration set can be pre-defined or updated adaptively during the operation. In this case, selection of time gap is conditioned on the H value as shown in Table 1.

**Table 1**

| **MsgA configuration** | **Tg (time gap between PRACH and PUSCH in MsgA)** | **Condition** |
|---|---|---|
| Config 1 | Tg1 | N < H1 |
| Config 2 | Tg2 | H1 ≤ N < H2 |
| ... | ... | ... |
| Config M-1 | Tg_{M-1} | H_{M-2} ≤ N < H_{M-1} |
| Config M | Tg_{M} | N ≥ H_{M-1} |

Each value of Tg is further associated with a set of PRACH and PUSCH transmission resources in MsgA, e.g., time slots and PRBs within the slot. The network node 16 also configures a set of PRACH and PUSCH transmission resources in MsgA (e.g., time-frequency resources such as slots and PRBs for PRACH and PUSCH transmissions) for each configuration used by the network node 16.

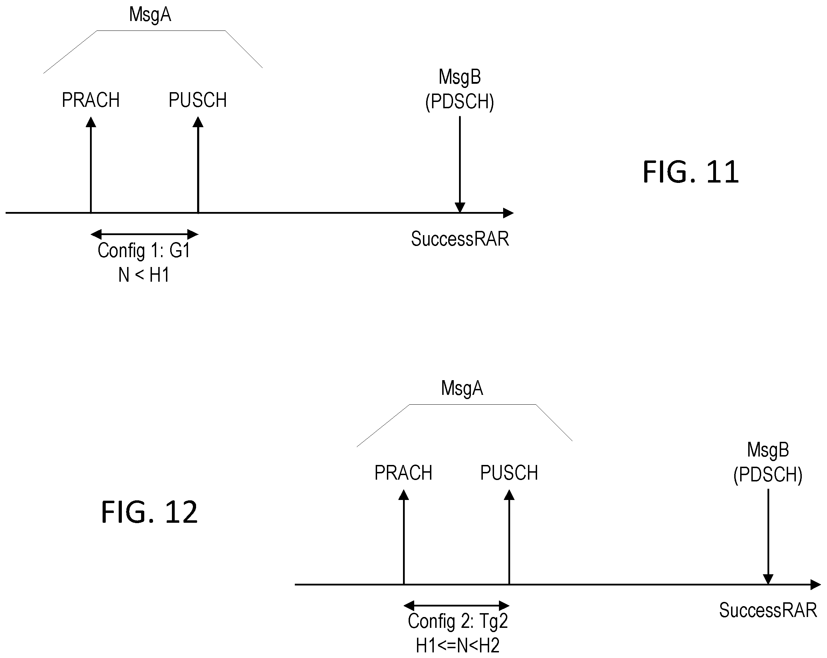

When N indicates the number (i.e., quantity) of UL LBT failures, for example, when the wireless device 22 starts the random access procedure with 2-step RACH, the wireless device 22 sets N=0 and transmit MsgA with Tg=Tg1 as illustrated in FIG. 11. If the wireless device 22 fails MsgA transmission due to the UL LBT failure, N is increased by 1. After several consecutive RACH transmission failures and N becomes equal to H1, then the wireless device 22 transmits MsgA with Tg=Tg2 as illustrated in FIG. 12. In general, if N ≥ Hm, then the wireless device 22 transmits MsgA based on configuration m, which corresponds to Tg=Tgm. In this example, the quantity of CCA failures is a property associated with message A of a 2-step RACH (i.e., random access procedure type).

In one or more embodiments, the network node 16 may use two configurations configuration 1 and configuration 2 in cell1, i.e., with one threshold (H1). If the UL LBT failures experienced by the wireless device 22 remain below H1 (i.e., N < H1) then the wireless device 22 selects Tg = Tg1 and determines associated resources where PRACH and PUSCH in MsgA can be transmitted and transmits PRACH and PUSCH in the determined resources. If the UL LBT failures experienced by the wireless device 22 becomes equal to or larger than H1 (i.e., N ≥ H1) then the wireless device 22 selects Tg = Tg2 and determines the associated resources where PRACH and PUSCH in MsgA can be transmitted and then transmits PRACH and PUSCH in the determined resources.

In one or more examples, the network node 16 configuring the wireless device 22 with information (e.g., parameters Tg, etc.) may be the same as the first network node 16 (NN1) or it may be another network node 16 (e.g., NN2) different than the first network node 16.

### Methods for selection of random access procedure type

In one or more embodiments, the wireless device 22 adapts type of RA depending on the time gap between PRACH and PUSCH time resources and/or number of UL LBT failures experienced by the wireless device 22. In one example, the adaptation of the RA type is based on information received from the network and/or network node 16 which is in turn based on the CCA operational results (e.g., CA failures) experienced by the network node 16.

In one example, it is assumed that the network node 16 (NN) configures the wireless device 22 with information (e.g., resources) related to both 4-step RACH and 2-step RACH in cell1 (where cell1 may be provided by network node 16). This allows the wireless device 22 to send RA in cell1. Moreover, the network node 16 configures the time gap between PRACH and PUSCH for 2-step RACH MsgA to Tg. The wireless device 22 selects between 2-step RACH and 4-step RACH depending on or based at least on the configured time gap Tg and/or the number of UL LBT failures N used for random access attempts. In one or more embodiments, a CCA failure corresponds to or includes a LBT failure. In one or more embodiments, the steps performed by the wireless device 22 to select between 2-step RACH and 4-step RACH in cell1 are described below:
Step 1: the wireless device 22 chooses 2-step RACH and attempts random access procedure.
Step 2: the wireless device 22 counts the number of UL LBT failures (N) in random access procedure in 2-step RACH. If the wireless device 22 cannot transmit PRACH because of UL LBT failure, N is increased by K1. If the wireless device 22 can transmit PRACH but the wireless device 22 cannot transmit PUSCH due to the LBT failure, N is increased by K2. For example, K1=1 and K2=2.
Step 3: the wireless device switches to 4-step RACH depending on a relation between N and/or Tg and their respective thresholds. In one example, the wireless device 22 switches to 4-step RACH (i.e., switches random access procedure types) when N (e.g., quantity of CCA failures) and/or Tg exceed their respective thresholds, e.g., the wireless device 22 switches to 4-step RACH if N > Hn and/or Tg > Htg. For example, Hn=3 (times) and Htg=10 (slots). Otherwise if N ≤ Hn and Tg ≤ Htg then the wireless device 22 continues to perform RA using 2-step RACH procedure.

The values of parameters Hn and Htg can be pre-defined or the wireless device 22 can be configured with one or more values of one or more parameters by the network node 16 which may be the same as the first network node 16 (NN1) or a different network node 16 (e.g., NN2). The wireless device 22 may further be configured to determine whether the wireless device 22 can switch between 2-step and 4-step RACH based on one or both parameters, i.e., based on N or Tg or both N and Tg.

In the examples, in this embodiment, the network node 16 is configuring the wireless device 22 with any of the information that may be the same as the first network node 16 (NN1) or it may be a different network node 16, e.g., NN2.

The processes and/or methods described herein advantageously provides some control to the network node 16 to steer the wireless device 22 to one or more specific procedures/processes when the wireless device 22 fails to transmit PRACH or PUSCH due to LBT failure.

For example, the number (i.e., quantity) of CCA evaluation/LBT attempts (e.g., CCA failures) that the wireless device 22 may perform can be same or similar between 2-step RA and 4-step RA when Tg is quite large (i.e., Tg > COT). In this case, there may be no clear advantage to prefer or start with the 2-step RA compared to 4-step RA from an LBT point of view. However, starting with the 4-step RA gives more control to the network node 16 as the network node 16 can, e.g., postpone/delay the MSG3 transmission when the channel is busy in part because the network node 16 can perform CCA evaluation and prepare the wireless device 22 for MSG3 transmission. This provides an overall better RA performance as the wireless device 22 can more adaptively select RA type depending on the Tg. Starting with the 2-step RA may not provide this flexibility to the wireless device 22 in the same operating scenario. That is, the quantity of CCA failures is a property associated with message 1 of a 4-step RA (e.g., random access procedure type) as the process starts with 4-step RA.

Another advantage provided by the one or more methods and/or embodiments described herein may be that the wireless device 22 can already, at the beginning or toward the beginning of the process, select a more suitable RA type based on the parameters described above (e.g., Tg). By selecting the proper one, in the beginning, the wireless device 22 avoids the risk of attempting RA using a less suitable RA type (e.g., 2-step RA) and thereafter falling back to more suitable RA type (e.g., 4-step RA), which may lead to more total delay for the procedure.

Some NR-U wireless device 22 implementations may require a delay between PRACH and PUSCH. This delay increases the amount of time needed to transmit the PRACH and PUSCH, and so a larger COT may be needed for such wireless devices 22. Two-step random access allows low latency random access procedures, and so in scenarios where low latency is desirable, a network node 16 may choose to configure its random access resources primarily for two step operation. In these scenarios, there may be little or no 4-step RACH resource available, and when the total time needed to transmit PRACH and PUSCH exceeds the COT needed for 2-step operation, the wireless device 22 may also not be able to use 4-step RACH procedures. One solution to this problem is to allow the wireless device 22 to transmit a RACH preamble associated with 2-step operation without transmitting a msgA PUSCH. Since the network node 16 may not generally know the delay capability of wireless devices 22 prior to initial access, the network node 16 may not be able to infer if the configuration it provides to the wireless device 22 meets the wireless device 22's delay requirements, and so the network node 16 may not generally know if the wireless device 22 actually transmits a msgA PUSCH. If the network node 16 does not know the capability of the wireless device 22 prior to initial access, and the network node 16 does not want to use 4-step access, the network node 16 may allow and/or configure the wireless device 22 to repeatedly transmit in the two step RACH procedure, and continue to attempt to decode msgA PUSCHs that are not actually transmitted; however, this may waste resources and delay the wireless device 22's access to the cell. The network node 16 may thus, as one alternative, indicate fallback to 4-step RA operation by transmitting a fallbackRAR to the wireless device 22 when it receives a 2-step RA preamble without receiving an associated MsgA PUSCH transmission. In another alternative, the network node 16 may attempt to perform energy detection on the msgA PUSCH DMRS and/or the msgA PUSCH resource elements that carry UL-SCH in order to estimate if the msgA PUSCH was actually transmitted by the wireless device 22. If the network node 16 determines that a preamble is transmitted without a PUSCH, then the network node 16 can choose/select to indicate, to the wireless device 22, a fallback to 4-step operation such as by, for example, transmitting a fallbackRAR to the wireless device 22). In this manner, those wireless devices 22 that do not transmit a PUSCH because the PO is too close to the RO can be directed to 4-step operation, while wireless devices 22 that transmitted a PUSCH that was not received by the network node 16 can still continue to use 2-step operation.

Therefore, in one or more embodiments, a wireless device 22 adapts a random access procedure according to a channel occupancy time (COT). The wireless device 22 determines a channel occupancy time for a transmission by the wireless device 22 using shared channel access. It also receives a first and a second configuration identifying a random access preamble occasion ('RO') and a PUSCH transmission occasion ('PO'), respectively. The wireless device 22 selects a random access preamble and an RO containing the preamble and identifies a PO corresponding to the RO. When the combined duration of the random access preamble, the PO, and a minimum delay is not greater than the channel occupancy time, the wireless device 22 transmits the PRACH and a PUSCH in the PO such that the random access preamble is followed by the PUSCH at a delay not less than the minimum delay, where the combined duration comprises the time from the start of the preamble to the end of the PO. When the combined duration of a PRACH, the PO, and the minimum delay for a wireless device 22 is greater than the channel occupancy time, the wireless device 22 transmits the random access preamble in the RO. In some such embodiments, the minimum preamble-RO delay is a wireless device 22 capability. In these embodiments, the wireless device 22 may be identified as supporting transmission of the random access preamble followed by a PUSCH at a delay not less than the minimum delay.

### Examples may include:

Example 1. (wireless devices 22 that require a delay between PRACH and PUSCH for NR-U. If the PO is greater than a COT, fall back by transmitting only the PRACH) A method of adapting a random access procedure according to a channel occupancy time comprising:
- Determining a channel occupancy time for a transmission by the wireless device 22 using shared channel access;
- Receiving a first and a second configuration identifying a random access preamble occasion ('RO') and a PUSCH transmission occasion ('PO'), respectively;
- Selecting a random access preamble and an RO containing the preamble;
- Identifying a PO corresponding to the RO;
- When the combined duration of the random access preamble, the PO, and a minimum delay is not greater than the channel occupancy time,
   o transmitting the PRACH and a PUSCH in the PO such that the random access preamble is followed by the PUSCH at a delay not less than the minimum delay,
   o wherein the combined duration comprises the time from the start of the preamble to the end of the PO, and
- When the combined duration of a PRACH, the PO, and the minimum delay for a wireless device 22 is greater than the channel occupancy time,
   o Transmitting the random access preamble in the RO.

Example 2. (The minimum preamble-RO delay is a wireless device capability) The method of Example 1, wherein the wireless device 22 is identified as supporting transmission of the random access preamble followed by a PUSCH at a delay not less than the minimum delay.

### Some other Examples:

Example A1. A network node 16 configured to communicate with a wireless device 22 (WD 22), the network node 16 configured to, and/or comprising a radio interface 36 and/or comprising processing circuitry 38 configured to:
configure the wireless device 22 with a time gap associated with a random access procedure, the time gap value being based at least on whether a carrier is subject to a listen-before-talk, LBT, procedure; and
optionally perform a random access procedure based at least in part on the time gap.

Example A2. The network node 16 of Example A1, wherein the time gap is between resources used for PRACH and PUSCH transmissions in 2-step RACH.

Example A3. The network node 16 of any one of Examples A1-A2, wherein the time gap is further based on at least one parameter of the LBT procedure.

Example A4. The network node 16 of any one of Examples A3, wherein the at least one parameter is based at least on one of a channel occupancy time, COT, LBT failure statistics and whether the COT is configured for an unlicensed carrier.

Example A5. The network node 16 of any one of Examples A1-A4, wherein the processing circuitry 38 is configured to configure the wireless device with 4-step RACH and the 2-step RACH.

Example A6. The network node 16 of any one of Examples A1-A4, wherein the processing circuitry 38 is further configured to configure with wireless device 22 with additional time gaps between resources used for PRACH and PUSCH transmissions in 2-step RACH for selection by the wireless device 22.

Example B1. A method implemented in a network node 16, the method comprising:
configuring the wireless device 22 with a time gap associated with a random access procedure, the time gap value being based at least on whether a carrier is subject to a listen-before-talk, LBT, procedure; and
optionally performing a random access procedure based at least in part on the time gap.

Example B2. The method of Example B1, wherein the time gap is between resources used for PRACH and PUSCH transmissions in 2-step RACH

Example B3. The method of Example B1, wherein the adapting of the time gap is further based on at least one parameter of the LBT procedure.

Example B4. The method of any one of Examples B3, wherein the at least one parameter is based at least on one of a channel occupancy time, COT, LBT failure statistics and whether the COT is configured for an unlicensed carrier.

Example B5. The method of any one of Examples B1-B4, wherein the processing circuitry 38 is configured to configure the wireless device 22 with 4-step RACH and the 2-step RACH.

Example B6. The method of any one of Examples B1-B4, further comprising configuring with wireless device 22 with additional time gaps between resources used for PRACH and PUSCH transmissions in 2-step RACH for selection by the wireless device 22.

Example C1. A wireless device 22 (WD 22) configured to communicate with a network node 16, the WD 22 configured to, and/or comprising a radio interface 36 and/or processing circuitry 38 configured to:
receive a configuration for a time gap associated with a random access procedure, the time gap value being based at least on whether a carrier is subject to a listen-before-talk, LBT, procedure; and
optionally perform a random access procedure based at least in part on the time gap.

Example C2. The wireless device 22 of Example C1, wherein the time gap is between resources used for PRACH and PUSCH transmissions in 2-step RACH.

Example C3. The wireless device 22 of any one of Examples C1-C2, wherein the time gap is further based on at least one parameter of the LBT procedure.

Example C4. The wireless device 22 of any one of Examples C3, wherein the at least one parameter is based at least on one of a channel occupancy time, COT, LBT failure statistics and whether the COT is configured for an unlicensed carrier.

Example C5. The wireless device 22 of any one of Examples C3-C4, wherein the processing circuitry 50 is further configured to:
receive a configuration for 4-step RACH and the 2-step RACH; and
one of select and switch between the 4-step RACH and the 2-step RACH based at least in part on the at least one parameter.

Example C6. The wireless device 22 of any one of Examples C1-C4, wherein the processing circuitry 50 is further configured to:
receive configurations for additional time gaps between resources used for PRACH and PUSCH transmissions in 2-step RACH; and
select among the time gaps for implementation for the random access procedure.

Example D1. A method implemented in a wireless device 22 (WD 22), the method comprising:
receiving a configuration for a time gap associated with a random access procedure, the time gap value being based at least on whether a carrier is subject to a listen-before-talk, LBT, procedure; and
optionally performing a random access procedure based at least in part on the time gap.

Example D2. The method of Example D1, wherein the time gap is between resources used for PRACH and PUSCH transmissions in 2-step RACH.

Example D3. The method of Example D1, wherein the time gap is further based on at least one parameter of the LBT procedure.

Example D4. The method of any one of Examples D3, wherein the at least one parameter is based at least on one of a channel occupancy time, COT, LBT failure statistics and whether the COT is configured for an unlicensed carrier.

Example D5. The method of any one of Examples D3-D4, further comprising:
receiving a configuration for 4-step RACH and the 2-step RACH; and
one of selecting and switching between the 4-step RACH and the 2-step RACH based at least in part on the at least one parameter.

Example D6. The method of any one of Examples D1-D4, further comprising:
receiving configurations for additional time gaps between resources used for PRACH and PUSCH transmissions in 2-step RACH; and
selecting among the time gaps for implementation for the random access procedure.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:

| | |
|---|---|
| Abbreviation | Explanation |
| ACK | Acknowledgement |
| BWP | Bandwidth part |
| CAPC | Channel access priority class |
| CCA | Clear channel assessment |
| COT | Channel occupancy time |
| CSI-RS | Channel state information reference signal |
| CWS | Contention window size |
| DC | Dual connectivity |
| DL | Downlink |
| DMRS | Demodulation reference signal |
| DRS | Discovery reference signal |
| ED | Energy detection |
| LBT | Listen before talk |
| LAA | Licensed assisted access |
| LTE | Long term evolution |
| MAC | Media access control |
| MCOT | Maximum channel occupancy time |
| NR | New radio access system |
| NR-U | NR unlicensed |
| OFDM | Orthogonal frequency division multiplexing |
| PDCCH | Physical downlink control channel |
| PDSCH | Physical downlink shared channel |
| PO | PUCCH occasion |
| PBCH | Physical broadcast channel |
| PRACH | Physical random acces channel |
| PCell | Primary cell |
| PDU | Packet data unit |
| PSCell | Primary SCG cell |
| PSS | Primary synchrinization channel |
| PUCCH | Physical uplink control channel |
| PUSCH | Physical uplink shared channel |
| QCI | Qos class indicator |
| QoS | Quality of service |
| RA | Random access |
| RACH | Random access channel |
| RAN | Random access network |
| RAR | Random access response |
| RO | RACH occasion |
| RRM | Radio resource management |
| RSRP | Reference signal received power |
| RSRQ | Reference signal received quality |
| RSSI | Reference signal strength indicator |
| SCG | Secondary cell group |
| SCS | Subcarrier spacing |
| SDU | Service data unit |
| SLIV | Start and length indicator value |
| SpCell | Special cell |
| SR | Scheduling request |
| SSB | Synchronization signal and PBCH block |
| SSS | Secondary synchronization channel |
| TA | Timing alignment |
| UE | User equipment |
| UL | Uplink |

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. A wireless device (22), comprising:
processing circuitry (50) configured to:
receive from a network node (16), a set of configurations on MsgA transmission of a 2-step Random Access, RA, procedure, wherein each configuration indicates a time gap between physical random access channel, PRACH, resources and physical uplink shared channel, PUSCH, resources for the MsgA transmission;
determine a time gap length out of the indicated time gaps based at least on the configurations and on clear channel assessment, CCA, operational results that include results of CCA failure or CCA success obtained by the network node (16) and received by the wireless device (22) from the network node (16); and
transmit a MsgA in a 2-step RA procedure based on the determined time gap length.

2. The wireless device (22) of claim 1, the processing circuitry (50) is further configured to:
receive the CCA operational results via broadcasted system information, or obtain the CCA operational results by listen before talk, LBT, attempts.

3. The wireless device (22) of claim 1 or 2, wherein the CCA operational results comprise:
a quantity of CCA failures associated with random access attempts.

4. The wireless device (22) of claim 1 or 3, the processing circuitry (50) is configured to determine a time gap length further based on uplink, UL, LBT status.

5. The wireless device (22) of claim 3, wherein each of the at least one configuration comprises a different time gap length associated with a threshold of quantity of CCA failures;
the processing circuitry (50) is configured to determine the time gap length associated with the threshold in which the quantity of CCA failures fit into the condition and the associated threshold.

6. The wireless device (22) of claim 3, wherein each of the at least one configuration comprises a different time gap length;
wherein the processing circuitry (50) is further configured to receive a configuration on a threshold of quantity of CCA failures;
the processing circuitry (50) is configured to determine the time gap length by selecting a corresponding time gap length based on comparison between the quantity of CCA failures and the configured threshold.

7. The wireless device (22) of any one of Claims 1-6, wherein the processing circuitry (50) is further configured to:
receive an indication of a predefined time gap threshold; and
trigger to switch to another random access procedure type
based at least on the determined time gap length exceeding the predefined time gap threshold.

8. The wireless device (22) of Claim 7, wherein the time gap indicated in the one or more configuration on MsgA transmission is based at least on a channel occupancy time, COT, configured for operated unlicensed carrier.

9. The wireless device (22) of claim 7, wherein another random access procedure type isa 4-step random access procedure type.

10. A method performed by a wireless device (22), the method comprising:
receiving, from a network node (16), a set of configurations on MsgA transmission of a 2-step Random Access, RA, procedure, wherein each configuration indicates a time gap between physical random access channel, PRACH, resources and physical uplink shared channel, PUSCH, resources for the MsgA transmission;
determining a time gap length out of the indicated time gaps based at least on the configurations and on clear channel assessment, CCA, operational results that include results of CCA failure or CCA success obtained by the network node (16) and received by the wireless device (22) from the network node (16); and
transmitting a MsgA in a 2-step RA procedure based on the determined time gap length.

11. The method of claim 10, wherein each of the at least one configuration comprises a different time gap length associated with a threshold of quantity of CCA failures, the determined of the time gap length being associated with the threshold in which the quantity of CCA failures fit into the condition and the associated threshold; or
wherein each of the at least one configuration comprises a different time gap length, the method further comprising: receiving a configuration on a threshold of quantity of CCA failures; determining the time gap comprises selecting a corresponding time gap length based on comparison between the quantity of CCA failures and the configured threshold.

12. The method in a wireless device of claim 10, further comprising:
receiving an indication of a predefined time gap threshold; and
triggering to switch to another random access procedure type based at least on the determined time gap length exceeding the predefined time gap threshold.

13. A network node (16) configured to communicate with a wireless device (22), the network node (16) comprising:
processing circuitry (38) configured to:
configure the wireless device (22) with:
a set of configurations on MsgA transmission of a 2-step Random Access, RA, procedure, wherein each configuration indicates a time gap between physical random access channel, PRACH, resources and physical uplink shared channel, PUSCH, resources for the MsgA transmission; and
receive a MsgA in a 2-step RA procedure in which a time gap length out of the indicated time gaps is determined based at least on the configurations and clear channel assessment, CCA, operational results that include results of CCA failure or CCA success obtained by the network node (16) and transmitted to the wireless device (22).

14. The network node (16) of Claim 13, wherein each of the at least one configuration on MsgA transmission comprises a different time gap length; the processing circuitry (38) is further configured to configure the wireless device (22) with a threshold of quantity of CCA failures, to enable the wireless device to determine the time gap length based on comparison of the threshold of quantity of CCA failures and CCA operational results.

15. The network node (16) of Claim 13 or 14, wherein the time gap indicated in the one or more configuration on MsgA transmission is configured based at least on a channel occupancy time, COT, configured for operated unlicensed carrier.

## Patentansprüche

1. Drahtlose Vorrichtung (22), umfassend:
Verarbeitungsschaltungsanordnung (50), die für Folgendes konfiguriert ist:
Empfangen eines Satzes von Konfigurationen einer MsgA-Übertragung einer 2-Schritt-Direktzugriffsprozedur, 2-Schritt-RA-Prozedur, von einem Netzwerkknoten (16), wobei jede Konfiguration eine Zeitlücke zwischen Physical Random Access Channel-Ressourcen, PRACH-Ressourcen, und Physical Uplink Shared Channel-Ressourcen, PUSCH-Ressourcen, für die MsgA-Übertragung angibt;
Bestimmen einer Zeitlückenlänge aus den angegebenen Zeitlücken zumindest basierend auf den Konfigurationen und auf Clear Channel Assessment-Betriebsergebnissen, CCA-Betriebsergebnissen, die Ergebnisse von CCA-Misserfolg oder CCA-Erfolg umfassen, die durch den Netzwerkknoten (16) erhalten und durch die drahtlose Vorrichtung (22) von dem Netzwerkknoten (16) empfangen werden; und
Senden einer MsgA in einer 2-Schritt-RA-Prozedur basierend auf der bestimmten Zeitlückenlänge.

2. Drahtlose Vorrichtung (22) nach Anspruch 1, wobei die Verarbeitungsschaltungsanordnung (50) ferner für Folgendes konfiguriert ist:
Empfangen der CCA-Betriebsergebnisse über per Broadcast gesendete Systeminformationen oder
Erhalten der CCA-Betriebsergebnisse durch Listen-Before-Talk-Versuche, LBT-Versuche.

3. Drahtlose Vorrichtung (22) nach Anspruch 1 oder 2, wobei die CCA-Betriebsergebnisse Folgendes umfassen:
eine Menge an CCA-Misserfolgen, die mit Direktzugriffsversuchen assoziiert sind.

4. Drahtlose Vorrichtung (22) nach Anspruch 1 oder **3,** wobei die Verarbeitungsschaltungsanordnung (50) dafür konfiguriert ist, eine Zeitlückenlänge ferner basierend auf einem Uplink-LBT-Status, UL-LBT-Status, zu bestimmen.

5. Drahtlose Vorrichtung (22) nach Anspruch **3,** wobei jede der mindestens einen Konfiguration eine andere Zeitlückenlänge umfasst, die mit einem Schwellenwert der Menge an CCA-Misserfolgen assoziiert ist;
die Verarbeitungsschaltungsanordnung (50) dafür konfiguriert ist, die Zeitlückenlänge zu bestimmen, die mit dem Schwellenwert assoziiert ist, bei dem die Menge an CCA-Misserfolgen in die Bedingung und den assoziierten Schwellenwert passt.

6. Drahtlose Vorrichtung (22) nach Anspruch 3, wobei jede der mindestens einen Konfiguration eine andere Zeitlückenlänge umfasst;
wobei die Verarbeitungsschaltungsanordnung (50) ferner dafür konfiguriert ist, eine Konfiguration bezüglich eines Schwellenwerts der Menge an CCA-Misserfolgen zu empfangen;
wobei die Verarbeitungsschaltungsanordnung (50) dafür konfiguriert ist, die Zeitlückenlänge durch Auswählen einer entsprechenden Zeitlückenlänge basierend auf einem Vergleich zwischen der Menge an CCA-Misserfolgen und dem konfigurierten Schwellenwert zu bestimmen.

7. Drahtlose Vorrichtung (22) nach einem der Ansprüche 1-6, wobei die Verarbeitungsschaltungsanordnung (50) ferner für Folgendes konfiguriert ist:
Empfangen einer Angabe eines vordefinierten Zeitlückenschwellenwerts; und
Veranlassen, zu einem anderen Typ von Direktzugriffsprozedur zu wechseln, zumindest basierend darauf, dass die bestimmte Zeitlückenlänge den vordefinierten Zeitlückenschwellenwert überschreitet.

8. Drahtlose Vorrichtung (22) nach Anspruch 7, wobei die in der einen oder den mehreren Konfigurationen bezüglich der MsgA-Übertragung angegebene Zeitlücke zumindest auf einer Kanalbelegungszeit, COT, basiert, die für einen betriebenen unlizenzierten Träger konfiguriert ist.

9. Drahtlose Vorrichtung (22) nach Anspruch 7, wobei ein anderer Direktzugriffsprozedurtyp ein Direktzugriffsprozedurtyp mit 4 Schritten ist.

10. Verfahren, das von einer drahtlosen Vorrichtung (22) durchgeführt wird, wobei das Verfahren Folgendes umfasst:
Empfangen eines Satzes von Konfigurationen bezüglich einer MsgA-Übertragung einer 2-Schritt-Direktzugriffsprozedur, 2-Schritt-RA-Prozedur, von einem Netzwerkknoten (16), wobei jede Konfiguration eine Zeitlücke zwischen Physical Random Access Channel-Ressourcen, PRACH-Ressourcen, und Physical Uplink Shared Channel-Ressourcen, PUSCH-Ressourcen, für die MsgA-Übertragung angibt;
Bestimmen einer Zeitlückenlänge aus den angegebenen Zeitlücken zumindest basierend auf den Konfigurationen und auf Clear Channel Assessment-Betriebsergebnissen, CCA-Betriebsergebnissen, die Ergebnisse von CCA-Misserfolg oder CCA-Erfolg umfassen, die durch den Netzwerkknoten (16) erhalten und durch die drahtlose Vorrichtung (22) von dem Netzwerkknoten (16) empfangen werden; und
Senden einer MsgA in einer 2-Schritt-RA-Prozedur basierend auf der bestimmten Zeitlückenlänge.

11. Verfahren nach Anspruch 10, wobei jede der mindestens einen Konfiguration eine andere Zeitlückenlänge umfasst, die mit einem Schwellenwert der Menge an CCA-Misserfolgen assoziiert ist, wobei die bestimmte Zeitlückenlänge mit dem Schwellenwert assoziiert ist, bei dem die Menge an CCA-Misserfolgen in die Bedingung und den assoziierten Schwellenwert passt; oder
wobei jede der mindestens einen Konfiguration eine andere Zeitlückenlänge umfasst, wobei das Verfahren ferner Folgendes umfasst: Empfangen einer Konfiguration bezüglich eines Schwellenwerts der Menge an CCA-Misserfolgen; wobei das Bestimmen der Zeitlücke Auswählen einer entsprechenden Zeitlückenlänge basierend auf einem Vergleich zwischen der Menge an CCA-Misserfolgen und dem konfigurierten Schwellenwert umfasst.

12. Verfahren in einer drahtlosen Vorrichtung nach Anspruch 10, ferner umfassend:
Empfangen einer Angabe eines vordefinierten Zeitlückenschwellenwerts; und
Veranlassen, zu einem anderen Typ von Direktzugriffsprozedur zu wechseln, zumindest basierend darauf, dass die bestimmte Zeitlückenlänge den vordefinierten Zeitlückenschwellenwert überschreitet.

13. Netzwerkknoten (16), konfiguriert zum Kommunizieren mit einer drahtlosen Vorrichtung (22), wobei der Netzwerkknoten (16) Folgendes umfasst:
Verarbeitungsschaltungsanordnung (38), die für Folgendes konfiguriert ist:
Konfigurieren der drahtlosen Vorrichtung (22) mit einem Satz von Konfigurationen bezüglich einer MsgA-Übertragung einer 2-Schritt-Direktzugriffsprozedur, 2-Schritt-RA-Prozedur, wobei jede Konfiguration eine Zeitlücke zwischen Physical Random Access Channel-Ressourcen, PRACH-Ressourcen, und Physical Uplink Shared Channel-Ressourcen, PUSCH-Ressourcen, für die MsgA-Übertragung angibt; und
Empfangen einer MsgA in einer 2-Schritt-RA-Prozedur, in der eine Zeitlückenlänge aus den angegebenen Zeitlücken zumindest basierend auf den Konfigurationen und auf Clear Channel Assessment-Betriebsergebnisse, CCA-Ergebnissen, bestimmt wird, die Ergebnisse von CCA-Misserfolg oder CCA-Erfolg umfassen, die durch den Netzwerkknoten (16) erhalten und an die drahtlose Vorrichtung (22) gesendet werden.

14. Netzwerkknoten (16) nach Anspruch 13, wobei jeder der mindestens einen Konfiguration bezüglich der MsgA-Übertragung eine andere Zeitlückenlänge umfasst; wobei die Verarbeitungsschaltungsanordnung (38) ferner dafür konfiguriert ist, die drahtlose Vorrichtung (22) mit einem Schwellenwert der Menge an CCA-Misserfolgen zu konfigurieren, um der drahtlosen Vorrichtung zu ermöglichen, die Zeitlückenlänge basierend auf einem Vergleich des Schwellenwerts der Menge an CCA-Misserfolgen und CCA-Betriebsergebnissen zu bestimmen.

15. Netzwerkknoten (16) nach Anspruch 13 oder 14, wobei die in der einen oder den mehreren Konfigurationen bezüglich der MsgA-Übertragung angegebene Zeitlücke zumindest auf einer Kanalbelegungszeit, COT, basiert, die für einen betriebenen unlizenzierten Träger konfiguriert ist.

## Revendications

1. Dispositif sans fil (22), comprenant :
une circuiterie de traitement (50) configurée pour :
recevoir, depuis un nœud de réseau (16), un ensemble de configurations sur une transmission MsgA d'une procédure d'accès aléatoire, RA, à deux étapes, dans lequel chaque configuration indique un laps de temps entre des ressources de canal d'accès aléatoire physique, PRACH, et des ressources de canal partagé de liaison montante physique, PUSCH, pour la transmission MsgA ;
déterminer une longueur de laps de temps parmi les laps de temps indiqués sur la base au moins des configurations et de résultats opérationnels d'évaluation de canal libre, CCA, incluant des résultats d'échec de CCA ou de réussite de CCA obtenus par le nœud de réseau (16) et reçus par le dispositif sans fil (22) depuis le nœud de réseau (16) ; et
transmettre un MsgA dans une procédure RA à deux étapes sur la base de la longueur de laps de temps déterminée.

2. Dispositif sans fil (22) selon la revendication 1, dans lequel la circuiterie de traitement (50) est en outre configurée pour :
recevoir les résultats opérationnels de CCA via des informations système diffusées, ou
obtenir les résultats opérationnels de CCA par des tentatives d'écoute avant de parler, LBT.

3. Dispositif sans fil (22) selon la revendication 1 ou 2, dans lequel les résultats opérationnels de CCA comprennent :
une quantité d'échecs de CCA associés à des tentatives d'accès aléatoire.

4. Dispositif sans fil (22) selon la revendication 1 ou 3, dans lequel la circuiterie de traitement (50) est configurée pour déterminer une longueur de laps de temps en outre sur la base d'un statut de LBT de liaison montante, UL.

5. Dispositif sans fil (22) selon la revendication 3, dans lequel chacune de l'au moins une configuration comprend une longueur de laps de temps différente associée à un seuil de quantité d'échecs de CCA ;
la circuiterie de traitement (50) est configurée pour déterminer une longueur de laps de temps associée au seuil dans lequel la quantité d'échecs de CCA est conforme à la condition et au seuil associé.

6. Dispositif sans fil (22) selon la revendication 3, dans lequel chacune de l'au moins une configuration comprend une longueur de laps de temps différente ;
dans lequel la circuiterie de traitement (50) est en outre configurée pour recevoir une configuration sur un seuil de quantité d'échecs de CCA ;
la circuiterie de traitement (50) est configurée pour déterminer la longueur de laps de temps en sélectionnant une longueur de laps de temps correspondante sur la base d'une comparaison entre la quantité d'échecs de CCA et le seuil configuré.

7. Dispositif sans fil (22) selon l'une quelconque des revendications 1 à 6, dans lequel la circuiterie de traitement (50) est en outre configurée pour :
recevoir une indication d'un seuil de laps de temps prédéfini ; et
déclencher un passage à un autre type de procédure d'accès aléatoire sur la base au moins du fait que la longueur de laps de temps déterminée dépasse le seuil de laps de temps prédéfini.

8. Dispositif sans fil (22) selon la revendication 7, dans lequel le laps de temps indiqué dans les une ou plusieurs configurations sur une transmission MsgA est basé au moins sur un temps d'occupation de canal, COT, configuré pour une porteuse sans licence utilisée.

9. Dispositif sans fil (22) selon la revendication 7, dans lequel un autre type de procédure d'accès aléatoire est un type de procédure d'accès aléatoire à quatre étapes.

10. Procédé réalisé par un dispositif sans fil (22), le procédé comprenant :
la réception, depuis un nœud de réseau (16), d'un ensemble de configurations sur une transmission MsgA d'une procédure d'accès aléatoire, RA, à deux étapes, dans lequel chaque configuration indique un laps de temps entre des ressources de canal d'accès aléatoire physique, PRACH, et des ressources de canal partagé de liaison montante physique, PUSCH, pour la transmission MsgA ;
la détermination d'une longueur de laps de temps parmi les laps de temps indiqués sur la base au moins des configurations et de résultats opérationnels d'évaluation de canal libre, CCA, incluant des résultats d'échec de CCA ou de réussite de CCA obtenus par le nœud de réseau (16) et reçus par le dispositif sans fil (22) depuis le nœud de réseau (16) ; et
la transmission d'un MsgA dans une procédure RA à deux étapes sur la base de la longueur de laps de temps déterminée.

11. Procédé selon la revendication 10, dans lequel chacune de l'au moins une configuration comprend une longueur de laps de temps différente associée à un seuil de quantité d'échecs de CCA, la longueur de laps de temps déterminée étant associée au seuil dans lequel la quantité d'échecs de CCA est conforme à la condition et au seuil associé ; ou
dans lequel chacune de l'au moins une configuration comprend une longueur de laps de temps différente, le procédé comprenant en outre : la réception d'une configuration sur un seuil de quantité d'échecs de CCA ; la détermination du laps de temps comprend la sélection d'une longueur de laps de temps correspondante sur la base d'une comparaison entre la quantité d'échecs de CCA et le seuil configuré.

12. Procédé dans un dispositif sans fil selon la revendication 10, comprenant en outre :
la réception d'une indication d'un seuil de laps de temps prédéfini ; et
le déclenchement d'un passage à un autre type de procédure d'accès aléatoire sur la base au moins du fait que la longueur de laps de temps déterminée dépasse le seuil de laps de temps prédéfini.

13. Nœud de réseau (16) configuré pour communiquer avec un dispositif sans fil (22), le nœud de réseau (16) comprenant :
une circuiterie de traitement (38) configurée pour :
configurer le dispositif sans fil (22) avec :
un ensemble de configurations sur une transmission MsgA d'une procédure d'accès aléatoire, RA, à deux étapes, dans lequel chaque configuration indique un laps de temps entre des ressources de canal d'accès aléatoire physique, PRACH, et des ressources de canal partagé de liaison montante physique, PUSCH, pour la transmission MsgA ; et
recevoir un MsgA dans une procédure RA à deux étapes dans laquelle une longueur de laps de temps parmi les laps de temps indiqués est déterminée sur la base au moins des configurations et de résultats opérationnels d'évaluation de canal libre, CCA, incluant des résultats d'échec de CCA ou de réussite de CCA obtenus par le nœud de réseau (16) et transmis au dispositif sans fil (22).

14. Nœud de réseau (16) selon la revendication 13, dans lequel chacune de l'au moins une configuration sur une transmission MsgA comprend une longueur de laps de temps différente ; la circuiterie de traitement (38) est en outre configurée pour configurer le dispositif sans fil (22) avec un seuil de quantité d'échecs de CCA, pour permettre au dispositif sans fil de déterminer la longueur de laps de temps sur la base d'une comparaison du seuil de quantité d'échecs de CCA et de résultats opérationnels de CCA.

15. Nœud de réseau (16) selon la revendication 13 ou 14, dans lequel le laps de temps indiqué dans les une ou plusieurs configurations sur une transmission MsgA est configuré sur la base au moins d'un temps d'occupation de canal, COT, configuré pour une porteuse sans licence utilisée.
